# EUROPÄISCHE PATENTSCHRIFT

(11) **EP 1 677 890 B1**
(45) Veröffentlichungstag und Bekanntmachung des Hinweises auf die Patenterteilung: **17.09.2008**
(21) Anmeldenummer: 04706680.8
(22) Anmeldetag: 30.01.2004
(51) Int. Cl.: B01D 29/03, B01D 29/64, E02B 8/02

(54) **REINIGUNGSVORRICHTUNG FÜR EINEN SIEBRECHEN, SIEBRECHEN MIT REINIGUNGSVORRICHTUNG, SOWIE VERFAHREN ZUR REINIGUNG EINES SIEBRECHENS**
CLEANING DEVICE FOR A TRASH SCREEN, TRASH SCREEN COMPRISING A CLEANING DEVICE, AND METHOD FOR CLEANING ONE SUCH TRASH SCREEN
DISPOSITIF DE NETTOYAGE D'UNE GRILLE DE RETENUE, GRILLE DE RETENUE COMPORTANT UN DISPOSITIF DE NETTOYAGE ET PROCEDE DE NETTOYAGE D'UNE GRILLE DE RETENUE

(30) Priorität: 29.10.2003 DE 10350492
(43) Veröffentlichungstag der Anmeldung: 12.07.2006
(73) Patentinhaber: ROMAG RÖHREN UND MASCHINEN AG, CH-3186 Düdingen (CH)
(72) Erfinder: GLOOR, Kurt, M., CH-3280 Meyriez (CH)
(74) Vertreter: Kuhnen & Wacker
(86) Internationale Anmeldenummer: PCT/EP2004/000901
(87) Internationale Veröffentlichungsnummer: WO 2005/051514

(56) Entgegenhaltungen:
- WO-A-01/81017
- DE-A- 4 412 678
- DE-A- 10 048 528
- DE-A- 10 213 817
- US-A- 2 090 637
- US-A- 5 094 751
- US-A- 5 593 585
- PATENT ABSTRACTS OF JAPAN vol. 009, no. 146 (M-389), 21. Juni 1985 (1985-06-21) & JP 60 023509 A (KUBOTA TEKKO KK), 6. Februar 1985 (1985-02-06)
- PATENT ABSTRACTS OF JAPAN vol. 014, no. 227 (C-0718), 15. Mai 1990 (1990-05-15) & JP 02 056208 A (TOHOKU ELECTRIC POWER CO INC), 26. Februar 1990 (1990-02-26)

## Beschreibung

Die vorliegende Erfindung betrifft eine Reinigungsvorrichtung für einen von mit Schmutz beladenem Wasser durchströmten, in Abwasseranlagen verbauten Siebrechen zur Reinigung des Schmutzwassers von mitgeführtem Schmutz, nach dem Oberbegriff des Anspruchs 1, einen Siebrechen mit einer solchen Reinigungsvorrichtung nach dem Oberbegriff des Anspruchs 19, und ein Reinigungsverfahren hierfür nach dem Oberbegriff des Anspruchs 20.

Siebrechen für Abwasseranlagen sind aus der Praxis bekannt. Ein bewährter Siebrechen ist ferner in der EP 0 358 952 derselben Anmelderin diskutiert. Dieser Feinsiebrechen weist einen stromab in Durchströmrichtung des Schmutzwassers nach dem Stabsiebrechen angeordneten Reinigungswagen auf. Der parallel zur Siebrechenebene hin- und her bewegbare Reinigungswagen weist zwischen den Stäben des Siebrechens gegen die Durchströmrichtung des Schmutzwassers zur Schmutzwasserseite hin gerichtete, über die dem Schmutzwasser zugewandte Profiloberkante hinausragende Zähne auf, die als Reinigungskamm zusammengefaßt den Stabsiebrechen von an dessen schmutzwasserseitiger Oberfläche anhaftendem Schmutz mechanisch reinigen.

Weiterhin ist von der Anmelderin eine bewährte Abwasseranlage mit Siebrechen in der EP 0 614 397 diskutiert worden. Der dort beschriebene Feinsiebrechen ist in einem Regenüberlaufbauwerk vertikal eingebaut und verfügt ebenfalls über einen stromab in Durchströmrichtung des Schmutzwassers nach dem Siebrechen angeordneten Reinigungswagen mit einer als Reinigungskamm ausgebildeten Reinigungseinheit. Derlei Reinigungskämme haben sich in der Vergangenheit für Stabsiebrechen bewährt.

Eine, weitere Reinigungsvorrichtung für einen Stabsiebrechen ist in der DE 100 48 528 A1 diskutiert. Ein dem Stabsiebrechen zugeordneter Reinigungswagen ist stromab in Durchströmrichtung des Schmutzwassers hinter dem Siebrechen auf der Reinwasserseite angeordnet und relativ zum Siebrechen in einer im wesentlichen parallel zum Siebrechen liegenden Ebene über die Breite des Siebrechens hin- und her fahrbar. Der Reinigungswagen weist eine Reinigungseinheit mit einem ebenfalls auf der Reinwasserseite befindlichen Reinigungsabschnitt auf, der den Siebrechen vom daran anhaftenden Schmutz säubern soll. Der Reinigungsabschnitt weist hierfür ein Spülrohr mit einer Vielzahl von Düsen auf. Die Düsen werden mit unter hohem Druck stehendem Frischwasser versorgt. Das aus den Düsen austretende, von der Reinwasserseite her auf die Gitterelemente des Stabrechens senkrecht aufprallende Frischwasser soll den an der gegenüberliegenden schmutzwasserseitigen Oberfläche des Siebrechens anhaftenden Schmutz ablösen und vom Siebrechen herunter spülen. Die Düsen sind als Flachstrahldüsen ausgebildet und weisen pro Düse einen Ausgangsdruck von 140 bar auf. Für jede Düse ist ein Frischwasserverbrauch von 180 Litern pro Stunde angegeben.

Die aus der DE 100 48 528 A1 bekannte, mit Hochdruck arbeitende Reinigungsvorrichtung ist aufgrund des hohen Frischwasserverbrauchs von 180 Liter pro Stunde pro Düse bereits aus umweltpolitischen Gesichtspunkten nicht vertretbar. Sie ist aber auch unter betriebswirtschaftlichen Betrachtungen nicht akzeptabel. Zudem sind zu deren Betrieb Hochdruckpumpen notwendig, die entsprechend teuer und dennoch häufig störanfällig sind. Die Düsen bedürfen einer sehr genauen Einstellung und sollten regelmäßig neu ausgerichtet werden. Die aus der DE 100 48 528 A1 bekannte Reinigungsvorrichtung ist nur für Stabsiebrechen konzipiert. Sie ist bei Lochsiebrechen nicht sinnvoll anwendbar.

Die für Stabsiebrechen entwickelten Reinigungsvorrichtungen mit einem Reinigungskamm zeigen bei Stabsiebrechen gute Reinigungsleistungen, sind jedoch wegen des zwischen den Stäben hindurch greifenden Reinigungskamms bereits aus konstruktiven Gründen nicht auf Lochsiebrechen übertragbar. Lochsiebrechen können damit nicht gereinigt werden. Für Lochsiebrechen sind aus der Praxis lediglich mechanisch reinigende Einrichtungen, wie beispielsweise Spatel, Rakeln oder Schaber bekannt geworden. Derlei mechanisch bzw. schabend arbeitende Reinigungsvorrichtungen sind bei Stabsiebrechen zwar verwendbar, zeigen jedoch keine zufriedenstellende Reinigungsleistung. Sie haben zudem den Nachteil, daß damit auch Lochsiebrechen nicht zuverlässig von anhaftendem Schmutz gereinigt werden können.

Zwar kann mit einem Spatel, einer Rakel oder einem Schaber der an der Siebrechenoberfläche anhaftende Schmutz herunter geschabt werden. Damit ist jedoch der in den Löchern an der Lochoberfläche anhaftende Schmutz und insbesondere der in der Löchern festsitzende Schmutz nicht entfernbar. Folglich trocknet der in den Löchern festsitzende Schmutz in Phasen, in denen der Siebrechen nicht von Schmutzwasser umspült ist, an und bäckt letztendlich fest. Somit steht in einer nachfolgenden Regenphase, in welcher der Siebrechen beispielsweise im Regenüberlaufbecken das überschießende Mischwasser reinigen soll, nicht mehr die volle Siebfläche zur Verfügung. Der Siebrechen ist damit nur noch eingeschränkt einsatzfähig.

Dementsprechend ist es Aufgabe der vorliegenden Erfindung, unter Vermeidung der vorgenannten Nachteile, eine Reinigungsvorrichtung für Siebrechen vorzuschlagen, mit der bei den meisten Siebrechentypen, insbesondere bei Lochsiebrechen oder bei Stabsiebrechen, zufriedenstellende Reinigungsergebnisse erzielbar sind.

Ferner ist es ein Aspekt der vorliegenden Erfindung, eine Reinigungsvorrichtung für Siebrechen anzugeben, die kostengünstig herstellbar und umweltschonend betreibbar ist

Weiterhin ist es Aufgabe der vorliegenden Erfindung, einen mit einer solchen Reinigungsvorrichtung ausgestatteten Siebrechen anzugeben sowie ein Reinigungsverfahren für einen zuverlässig arbeitenden Siebrechen vorzuschlagen.

Diese Aufgaben und Aspekte werden jeweils gelöst durch die Merkmale des Anspruchs 1, die Merkmale des Anspruchs 17, sowie durch die Merkmale des Anspruchs 18.

Dabei wird eine Reinigungsvorrichtung vorgeschlagen für einen von mit Schmutz beladenem Wasser, wie beispielsweise Ab-, Regen- oder Mischwasser, durchströmten, in Abwasseranlagen, wie beispielsweise Abwasserkanälen, Regenüberlaufbauwerken oder dergleichen, verbauten Siebrechen. Der Siebrechen dient zur Reinigung des Schmutzwassers von mitgeführtem Schmutz, wie beispielsweise Fäkalien, Schwebstoffe oder dergleichen. Die Reinigungsvorrichtung weist einen dem Siebrechen zugeordneten Reinigungswagen auf, der relativ zum Siebrechen in einer im wesentlichen parallel zum Siebrechen liegenden Ebene verfahrbar ist. Der Reinigungswagen verfügt über eine Reinigungseinheit mit einem den Siebrechen vom daran anhaftenden Schmutz säubernden Reinigungsabschnitt.

Es wird hierbei erstmals vorgeschlagen, daß die Reinigungseinheit Mittel zum Erzeugen einer auf die Siebrechenoberfläche hin gerichteten, am Reinigungsabschnitt vorherrschenden Schubwirkung aufweist. Die Schubwirkungsrichtung bzw. die Mündungsrichtung ist dabei unter einem Winkel von weniger als 45°, vorzugsweise weniger als 35°, besonders bevorzugt weniger als 25° bis hin zu näherungsweise 0°, zur Siebrechenebene geneigt. Mit dieser ist eine vom Reinigungsabschnitt zum Siebrechen gerichtete Reinigungskraft derart erzeugbar, daß an der Siebrechenoberfläche anhaftender Schmutz von einem durch den Reinigungsabschnitt strömenden und aus diesem durch eine Öffnung austretenden flüssigen Reinigungsmedium anlösbar, von der Siebrechenoberfläche ablösbar und mit dem Reinigungsmedium wegschwemmbar ist.

Die damit erzielbare Reinigungswirkung übertrifft dabei in vorteilhafter Weise die von bekannten Stabsiebrechenreinigungsvorrichtungen gewohnte Reinigungswirkung. Zudem zeichnet sich die hydrodynamische Reinigung des Siebrechens, die quasi einer Art Wasserspatel oder Wasserrakel gleicht, durch eine besonders schonende Reinigungsweise aus, so daß der Siebrechen als solcher keinerlei nennenswerte Abnutzung aufgrund dessen gründlicher Reinigung mit dem gerichteten Reinigungsmediumschwall erfährt.

Darüber hinaus kann hierfür in vorteilhafter Weise jedes beliebige flüssige Reinigungsmedium vorgesehen werden. Als Reinigungsmedien sind neben Frischwasser besonders vorteilhaft das ohnehin in der Abwasseranlage verfügbare Schmutz- oder Mischwasser verwendbar, sei es im ungereinigten Zustand auf der Schmutzwasserseite oder im bereits gereinigten Zustand auf der gegenüberliegenden Reinwasserseite.

Die erfindungsgemäße Reinigungsvorrichtung zeichnet sich durch eine besonders gute Verwendbarkeit bei Lochsiebrechen aus. Dies ist insoweit von Vorteil, wie es speziell für Lochsiebrechen bislang am Markt keine zufriedenstellend arbeitenden Reinigungsvorrichtungen gibt. Gleichwohl ist eine Verwendbarkeit der vorgeschlagenen Reinigungsvorrichtung bei Stabsiebrechen nicht ausgeschlossen und läßt dort ebenfalls gute Ergebnisse erwarten.

Die erfindungsgemäße Reinigungsvorrichtung kann bevorzugt stromauf in Durchströmungsrichtung des Schmutzwassers vor dem Siebrechen, also auf der Schmutzwasserseite, angeordnet sein. Sie kann aber auch stromab in Durchströmrichtung des Schmutzwassers nach dem Siebrechen vorgesehen sein. Damit stehen in vorteilhafter Weise eine Vielzahl von konstruktiven Alternativen offen, so daß die Reinigungsvorrichtung für den jeweiligen Anwendungsfall optimal dem zu reinigenden Siebrechen zugeordnet werden kann.

Indem der an der Oberfläche des Siebrechens anhaftende Schmutz mit Überdruck bzw. mit einer Schubwirkung oder einer Art Reinigungsimpuls von der Siebrechenoberfläche weg- bzw. aus den Löchern oder zwischen den Stäben heraus beschleunigt wird, kann nicht nur der an der dem Schmutzwasser zugewandten Oberfläche anliegende Schmutz weggeschwemmt werden, sondern auch jene Schmutzpartikel, die zwischen die Rechenstäbe eines Stabsiebrechens oder in die Löcher eines Lochsiebrechens eindringen und dort festsitzen, sind wieder problemlos heraus lösbar, so daß die gesamte Siebfläche des Siebrechens nach einer Reinigung mit der erfindungsgemäßen Reinigungsvorrichtung wieder vollständig gesäubert ist und damit ungeschmälert zur Verfügung steht.

Damit ist nach jedem Reinigungsvorgang wieder eine vollumfängliche Nutzbarkeit des Siebrechens über dessen gesamte Höhe und Breite gewährleistet.

Schmutz, wie beispielsweise Schwebstoffe, Schmutzpartikel, Feststoffe oder dergleichen, der vom Siebrechen aus dem Schmutzwasser bereits heraus gefiltert wurde bzw. von diesem am Weiterströmen gehindert worden ist und demzufolge am Siebrechen anhaftet, ist mit der erfindungsgemäßen Reinigungsvorrichtung derart vom Siebrechen ablösbar und mit der Schubwirkung des Reinigungsmediums vom Siebrechen derart weg schiebbar, daß dieser Schmutz nicht mehr erneut in den Siebvorgang zurückströmt und somit den Siebrechen auch nicht mehr erneut belastet oder gar verstopfen könnte.

In einer bevorzugten Ausführungsform der Reinigungsvorrichtung ist vorgesehen, daß der Reinigungsabschnitt stromauf in Durchströmrichtung des Schmutzwassers vor dem Siebrechen angeordnet ist. Dies bietet den Vorteil, daß angeschwemmter Schmutz von der Siebrechenoberfläche entfernt werden kann, bevor dieser überhaupt in die Öffnungen bzw. Löcher oder Schlitze des Siebrechens eindringen und sich dort festsetzen kann. Darüber hinaus ergibt sich damit eine zusätzliche konstruktive Gestaltungsfreiheit, da je nach Anwendungsfall und Bedarf zur Optimierung beispielsweise festgelegt werden kann, ob der Reinigungswagen von der Schmutzwasserseite oder von der Reinwasserseite her gegenüber dem Siebrechen abgestützt oder sich auf diesem von oben abstützend geführt wird. Zudem bietet dies die Möglichkeit einer Entnahme des Reinigungsmediums auf der Schmutzwasser- oder der Reinwasserseite beispielsweise mittels einer Pumpe, vorzugsweise einer Tauchpumpe mit integrierter Filtereinheit.

Dabei hat sich weiterhin als vorteilhaft gezeigt, die Wasserentnahme auf der Reinwasserseite mit einer dort zusammen mit der Reinigungseinheit und dem Reinigungswagen gegenüber dem Siebrechen verfahrbar installierten Pumpe vorzusehen, so daß das als Reinigungsmedium entnommene Reinwasser beispielsweise durch einen zugleich als Leitung ausgebildeten, den Siebrechen übergreifenden Verbindungsarm, der die Pumpe mit der Reinigungseinheit verbindet, zur Reinigungseinheit bzw. zu deren auf die Siebrechenoberfläche gerichteter Öffnung auf möglichst kurzem Weg und damit zugleich mit geringsten Druckverlusten gefördert werden kann.

Die Anordnung des Reinigungsabschnitts vor dem Siebrechen bietet den weiteren Vorteil, daß das auf dieser Seite anströmende und vor dem Siebrechen aufgestaute bzw. anstehende Schmutzwasser direkt, auf kürzestem Wege und im Prinzip ohne nennenswerten konstruktiven Aufwand als Reinigungsmedium dem Abwasserstrom entnommen und der Reinigungsvorrichtung zugeführt werden kann.

Damit kann in vorteilhafter Weise das vor dem Siebrechen ohnehin anstehende bzw. aufgestaute Abwasser als kostenloses Reinigungsmedium genutzt werden. Alternativ kann auch das durch den Siebrechen gereinigte, auf der Reinwasserseite vorliegende Reinwasser genutzt werden. Mit dem Abwasser - sei es das ungereinigte Schmutzwasser oder das gereinigte Reinwasser - steht nicht nur ein kostenloses Reinigungsmedium zur Verfügung, sondern es ist zudem auch immer in ausreichender Menge vorhanden. Dessen Nutzung als Reinigungsmedium anstelle von Frischwasser ist gerade unter umweltpolitischen als auch unter wirtschaftlichen Aspekten besonders zu begrüßen.

Ferner ist in einer bevorzugten Ausführungsform der Reinigungsvorrichtung vorgesehen, daß der Reinigungsabschnitt sich zumindest teilweise, vorzugsweise vollständig, über die Breite oder die Höhe des Siebrechens erstreckt, wobei die Längsachse des Reinigungsabschnitts im wesentlichen parallel zur Siebrechenebene orientiert ist. Sofern sich der Reinigungsabschnitt über die Breite des Siebrechens erstreckt, genügt es, wenn der Reinigungswagen über die Höhe des Siebrechens hin- und her fährt. Analog reicht es zur Reinigung der gesamten Siebrechenoberfläche bereits aus, wenn der Reinigungswagen lediglich über die Höhe des Siebrechens hin- und her fährt, sofern der Reinigungsabschnitt eine Erstreckung über die gesamte Breite des Siebrechens aufweist. Die Aufteilung in eine Reinigungsstrecke und eine auf eine Bewegungsrichtung konzentrierte, senkrecht dazu angeordnete Bewegungsstrecke ermöglicht eine besonders einfache und robuste Ausgestaltung des Reinigungswagens. Der Reinigungswagen kann beispielsweise schienengeführt oder -gebunden sein. Der Reinigungswagen benötigt dann lediglich Antriebsmittel für eine lineare Bewegung, die dementsprechend einfach angesteuert und geregelt werden können.

So kann beispielsweise in einem Kopfprofil des Siebrechenrahmens ein kolbenstangenloser Pneumatikzylinder eingebaut sein, der die am Verbindungsarm befestigte, ggf. separat geführte Pumpeneinheit und den auf der anderen Seite-des Verbindungsarmes, der insoweit auch als Düsen- bzw. Reinigungsabschnitthalter dient, befestigten Reinigungsabschnitt antreibt. Die anfallende Luft könnte zudem als ergänzende Reinigungshilfe dem Reinigungsmediumstrahl, wie beispielsweise Wasser, beigemischt werden, was diesen Wasserstrahl dann weicher macht, so daß die Reinigung noch schonender von statten ginge. Alternativ sind ebenso Zahnstangen-, Riemenantriebe oder dergleichen Antriebsmittel denkbar.

Einer weiter bevorzugten Ausführungsform zufolge ist die Mündungsrichtung der Öffnung bzw. ist die Öffnungsrichtung des Schlitzes oder sind die Längsachsen der Bohrungen dabei in einem Winkel von weniger als 25°, vorzugsweise weniger als 15°, und besonders bevorzugt weniger als 5°, zur Siebrechenoberfläche geneigt. Damit ist sichergestellt, daß der austretende Reinigungsmedium-Schwall mit der dabei erzeugten Schubwirkung - ähnlich wie ein Schwamm oder auch ähnlich wie eine aus Wasser gebildete Rakel oder ein Spatel, die über eine zu reinigende Oberfläche geführt werden - eine zum Siebrechen hin gerichtete Reinigungskraft entfalten kann, die besonders gut unter die anhaftenden Schmutzpartikel zwischen diese und die Siebrechenoberfläche eindringen und den Schmutz vom Siebrechen ablösen kann.

In einer weiter bevorzugten Ausführungsform ist vorgesehen, daß die Öffnung in Form einer Vielzahl von über die Länge des Reinigungsabschnitts verteilten kleineren Öffnungen, wie beispielsweise Bohrungen oder dergleichen ausgebildet ist. Alternativ ist vorgesehen, daß die Öffnung als ein sich über die gesamte Länge des Reinigungsabschnitts erstreckenden Schlitz ausgebildet ist. Es können sich auch mehrere kleinere Schlitze zu einem größeren Schlitz ergänzen. Schlitze wie Bohrungen sind beides Alternativen, die besonders kostengünstig herstellbar sind.

Gemäße einer besonders bevorzugten Ausführungsform wird der Schlitz in besonders vorteilhafter und vor allem kostengünstiger Weise von einem durch den Reinigungsmediumdruck anhebbaren elastischen Element, vorzugsweise einer Gummilippe oder einem Gummilappen, und einem benachbarten Gehäuseabschnitt des Reinigungsabschnittes bzw. der Düse, gegen den das elastische Element anliegt, begrenzt.

In einer weiter bevorzugten Ausführungsform ist vorgesehen, daß der Reinigungsabschnitt eine Zuführleitung zur Versorgung mit, vorzugsweise von der Reinwasserseite heran geführtem. Reinigungsmedium und ggf. eine Abführleitung oder Überdruckentlastungsöffnung zur Abfuhr von eventuell überschüssigem Reinigungsmedium aufweist. Über die Zuführleitung kann direkt aus dem anstehenden Schmutzwasser ein Teil davon angesaugt und als Nutzwasser bzw. Reinigungsmedium genutzt werden. Alternativ ist es denkbar, anstelle des Schmutzwassers gereinigtes Reinwasser oder ggf. auch Frischwasser oder dergleichen als Reinigungsmedium durch die Zuführleitung in den Reinigungsabschnitt einzuspeisen. Die Abführleitung kann dabei in vorteilhafter Weise auch zum Spülen des Reinigungsabschnitts herangezogen werden, so daß die Reinigungsvorrichtung hierfür nicht demontiert werden muß.

Entsprechend einer weiter bevorzugten Ausführungsform ist vorgesehen, daß der Reinigungsabschnitt ein Gehäuse aufweist, das im Querschnitt zumindest abschnittsweise im wesentlichen trapezförmig oder kastenartig ausgebildet ist, wobei zwei benachbarte Gehäuseabschnitt so zueinander ausgerichtet sein können, daß eine Düse entsteht, die einen flachen Reinigungsmediumstrahl erzeugt. Durch das Gehäuse des Reinigungsabschnitt ist das Reinigungsmedium hindurch förderbar. Dabei verfügt das Reinigungsabschnittsgehäuse über eine der Siebrechenoberfläche zugewandte, vorzugsweise schlitzförmige, Öffnung, durch die das Reinigungsmedium austreten kann, um mit der dabei erzeugten Schubwirkung an der Siebrechenoberfläche anhaftenden Schmutz anzuheben und wegzuschwemmen.

Einer alternativen Ausführungsform zufolge ist vorgesehen, daß das Reinigungsmedium in Rotation versetzbar und rotierend an der Siebrechenoberfläche vorbeiführbar ist. Die dabei erzeugte Reinigungsmedium-Spirale bzw. -wasserwalze ergibt die im wesentlichen parallel zur Siebrechenoberfläche wirkende Reinigungs-Schubkraft, mit der die Schmutzpartikel vom Siebrechen abgelöst werden. Die Schmutzpartikel lassen sich mit dem aus dem im Reinigungsabschnitt rotierenden Reinigungsmedium austretenden Reinigungsmediumanteil von der Oberfläche des Siebrechens abheben, gehen in das Brauch- bzw. Schmutzwasser über, werden vom austretenden Schmutzwasserschwall beschleunigt, und können dann zu einer Abflußseite weggeschwemmt werden.

Mit dem rotierenden Reinigungsmedium läßt sich zugleich aufgrund dessen auch noch beim Austreten aus der Öffnung des Reinigungsabschnitts vorhandener Rotationsenergie ein jedenfalls teilweise noch rotierender Reinigungsmedium-Schwall erzeugen, der nicht nur eine quer zur Durchströmrichtung des Schmutzwassers durch den Siebrechen gerichtete Reinigungsschubwirkung ermöglicht, sondern zudem aufgrund der Rotation einen zusätzlichen Reinigungseffekt wirksam werden läßt, der in gewisser Weise mit einer rotierenden Bürste verglichen werden kann.

Es wird angenommen daß die quer zur Durchströmrichtung des Schmutzwassers orientierte Schubwirkung des Reinigungsmediums das bereits durch den Siebrechen hindurch geströmte, vom Schmutz befreite Abwasser, das hinter dem Siebrechen gegenüber dem Reinigungsabschnitt ansteht, dazu veranlaßt, sich im Nahbereich des Siebrechens ebenfalls auch quer zur Durchströmrichtung zu bewegen. Auch wenn dieser Effekt noch nicht erklärt werden kann, so dürfte damit das durch den Siebrechen geströmte Wasser als sauberes Hilfsreinigungsmedium ergänzend ausgenutzt werden können. Durch die vom rotierenden Reinigungsmedium partiell im Nahbereich des Reinigungsabschnitts derart aufgezwungene Querbewegung kann am Siebrechen anhaftender Schmutz noch besser entfernt werden, bevor sich dieser am oder gar im Siebrechen endgültig festsetzen kann.

In einer weiter bevorzugten Ausführungsform der Reinigungsvorrichtung ist vorgesehen, daß der Drallvektor des rotierenden Reinigungsmediums im wesentlichen parallel zur Siebrechenebene und/oder zur Längsachse des Reinigungsabschnitts ausgerichtet ist. Hierbei kann die rotierende Wasserspirale ähnlich einer rotierenden Waschbürste über die Siebrechenoberfläche geführt werden. Im Bereich der tangentialen Berührungslinie oder Kontaktstellen zur Siebrechenoberfläche werden die Partikel von dem aus dieser rotierenden Wasserspirale austretenden Reinigungsmedium erfaßt, vom Siebrechen abgehoben und weggeführt.

Einer weiter bevorzugten Ausführungsform zufolge ist vorgesehen, daß das rotierende Reinigungsmedium zusätzlich zur Rotation eine translatorische Bewegungskomponente in Richtung des Drallvektors und/oder in Richtung der Längsachse des Reinigungsabschnitts aufweist. Dadurch ist sichergestellt, daß über die volle Ausdehnung des Reinigungsabschnitts eine Wasserspirale zur Erzeugung der Schubwirkung zur Verfügung steht und zugleich ein Wasseraustausch bzw. eine Umwälzung des Brauchwassers über die volle Ausdehnung des Reinigungsabschnitts stattfindet, so daß über die gesamte Länge des Reinigungsabschnitts ausreichend Reinigungsmedium zur Verfügung steht, von dem wiederum ein Teil näherungsweise tangential bzw. parallel zum Siebrechen austreten und über den Siebrechen hinweg strömen kann. Damit kann an jeder Stelle des Reinigungsabschnitts eine gleich gute Reinigungswirkung erzielt werden. Bildlich gesprochen ist diese Waschwasserwalze gewissermaßen vergleichbar mit einer über die gesamte Höhe oder Breite des Siebrechens ausgedehnten rotierenden Reinigungsbürste, die anstelle der rotierenden Borstenoberfläche eine rotierende Wasseroberfläche aufweist und zusätzlich eine Schubwirkung auf die Schmutzpartikel zu deren Entfernung aufprägt.

Entsprechend einer weiter bevorzugten Ausführungsform ist vorgesehen, daß der Reinigungsabschnitt ein Gehäuse aufweist, das im Querschnitt zumindest abschnittsweise im wesentlichen kreis- und/oder spiralförmiges ausgebildet ist. Durch das Gehäuse des Reinigungsabschnitt ist das um die Längsachse des Reinigungsabschnitt rotierende Reinigungsmedium hindurch förderbar. Dabei verfügt das Reinigungsabschnittsgehäuse über eine der Siebrechenoberfläche zugewandte Öffnung, durch welche ein Teil des Reinigungsmediums austreten kann, um mit der dabei erzeugten Schubwirkung an der Siebrechenoberfläche anhaftenden Schmutz anzuheben und wegzuschwemmen. Die Öffnung liegt im Querschnitt betrachtet in einem Bereich, der näherungsweise tangential an die Siebrechenoberfläche angrenzt bzw. dieser benachbart ist.

Der runde bzw. teilweise spiralförmige Querschnitt des Reinigungsabschnittsgehäuses stellt sicher, daß die Rotation der Wasserspirale auf die volle Ausdehnung des Reinigungsabschnitts aufrecht erhalten bleibt. Dabei läßt sich beispielsweise aus einem vollständig kreisförmigen Querschnitt relativ einfach ein teilweise spiralförmiger Querschnitt herstellen, indem an einer Stelle ein Schnitt gesetzt und der Kreis nach Außen aufgebogen wird, so daß gleichzeitig ein sich spiralförmig aufweitender Abschnitt des Querschnitts entsteht und zugleich die Öffnung zum Ausströmen des Reinigungsmediums zur Siebrechenoberfläche hin bereit gestellt werden kann.

In einer weiter bevorzugten Ausführungsform ist vorgesehen, daß das Reinigungsmedium mittels der Zuführleitung in den Reinigungsabschnitt tangential unter Erzeugung eines Dralls zuführbar ist. Das ist eine der energetisch günstigsten Alternativen zur Erzeugung der Rotation des Reinigungsmediums, welches die vorstehend angesprochene, rotierende Reinigungsmedium-Spirale bzw. Nutz- oder Brauchwasserspirale im Reinigungsabschnitt ausbildet.

Alternativ ist vorgesehen, daß der Reinigungsabschnitt eine sich in Längsrichtung des Reinigungsabschnitts erstreckende Wendel aufweist, mittels der das hindurch bzw. daran entlang geführte Reinigungsmedium in Rotation versetzbar ist. Bei einer im Reinigungsabschnitt feststehenden Wendel genügt es, wenn das Reinigungsmedium mit einer ausreichend hohen Geschwindigkeit durch den Reinigungsabschnitt hindurch gefördert wird, so daß es sich längs der Wendel entlang strömend automatisch in Rotation versetzt. Damit wird die gewünschte Wasserspirale bzw. Reinigungsmedium-Spirale automatisch ausgebildet, die dann beim Austreten aus dem Reinigungsabschnitt den vorstehend diskutierten Überdruck bzw. die Schubwirkung erzeugt, die mit der dabei ausgebildeten Reinigungskraft Schmutz von der Siebrechenoberfläche abhebt und wegschiebt. Alternativ kann die spiralförmige Wendel, beispielsweise von außen angetrieben, in Rotation versetzt werden. Damit kann das durch den Reinigungsabschnitt zirkulierende Reinigungsmedium zusätzlich mit einer Rotationsbewegung beaufschlagt und somit drehend beschleunigt werden. Eine so ausgebildete, drallbehaftete Strömung bzw. Spirale erzeugt wiederum die gewünschten Schubwirkung, die am Reinigungsabschnitt zum Reinigen des Siebrechens ausgenutzt wird.

In einer weiter bevorzugten Ausführungsform ist vorgesehen, daß die Reinigungseinheit eine Pumpe enthält. Ferner ist vorgesehen, daß die Reinigungsvorrichtung für einen Lochsiebrechen oder einem Stabsiebrechen verwendbar ist. Die erfindungsgemäße Reinigungsvorrichtung ist auch bei anderen Siebrechenkonstruktionen vorteilhaft nutzbar.

Die hier erstmals vorgeschlagene Reiniguagsvonichtung und das ebenfalls erstmals vorgeschlagene Reinigungsverfahren stellen besonders zuverlässige, kostengünstige, umweltschonende, gründliche und zugleich siebrechenchonende Alternativen zur Reinigung von Siebrechen dar.

Das in der Abwasseranlage verfügbare Schmutz- bzw. Brauchwasser verursacht keine Kosten. Es kann mittels handelsüblicher Pumptechnik mit geringer Leistung relativ einfach gefördert, auf Reinigungsdruck gebracht, umgewälzt und ohne größeren energetischen Aufwand ggf. zusätzlich in Rotation versetzt werden. Für die Ausbildung des Reinigungswagens sind ebenfalls bewährte Techniken verwendbar. Damit lassen sich sowohl die Kosten für die Herstellung einer erfindungsgemäßen Reinigungsvorrichtung als auch für deren zuverlässigen Betrieb in vorteilhafter Weise gering halten.

Die vorstehend genannten Aufgaben und Aspekte werden jeweils auch durch die Merkmale des Anspruchs 17 gelöst. Hierbei wird in vorteilhafter Weise erstmals ein Siebrechen mit einer Reinigungsvorrichtung, wie vorstehend diskutiert, vorgeschlagen. Damit lassen sich in synergetischer Weise die vorstehend genannten Vorteile und Effekte auf Siebrechen übertragen.

In verfahrenstechnischer Hinsicht werden die Aufgaben und Aspekte jeweils durch die Merkmale des Anspruchs 18 gelöst. Dabei wird erstmals ein Verfahren zum Reinigen von in Abwasseranlagen verbauten Siebrechen unter Verwendung einer Reinigungsvorrichtung vorgeschlagen, bei dem ein flüssiges Reinigungsmedium dem Siebrechen zugeführt und mit einem, vorzugsweise auf der Schmutzwasserseite angeordneten, Reinigungsabschnitt der Reinigungsvorrichtung an der Siebrechenoberfläche derart eine am Reinigungsabschnitt vorherrschende Schubwirkung erzeugend vorbei geführt wird, daß die Schubwirkung unter einem Winkel von weniger als 45°, vorzugsweise weniger als 35°, besonders bevorzugt weniger als 25° bis hin zu näherungsweise 0°, zur Siebrechenebene geneigt ist, und daß an der Siebrechenoberfläche anhaftender Schmutz mit einer zum Siebrechen hin gerichteten Reinigungskraft von einem Reinigungsmedium-Schwall, der von dem aus dem Reinigungsabschnitt durch eine Öffnung austretenden flüssigen Reinigungsmedium gebildet ist, abgelöst und weggeführt wird.

Damit lassen sich die bereits vorstehend zur Siebrechenreinigungsvorrichtung diskutierten Vorteile in synergetischer Weise mit dem Verfahren gleichermaßen erzielen.

Die vorstehend diskutierte Lösung der Aufgabe läßt sich mit der in der parallelen Anmeldung der selben Anmelderin diskutierten Lösung des Saugprinzips kombinieren bzw. ergänzen, so daß insoweit bezüglich der dortigen Offenbarung vollinhaltlich auf diese parallele Anmeldung verwiesen wird. Es wäre dabei denkbar z.B. über den Längsantrieb beispielsweise mittels eines Planetengetriebes oder dergleichen ein zusätzliches Laufrad oder eine zusätzliche Pumpeneinheit für die Saugvorrichtung anzutreiben.

Die Erfindung wird in nachfolgenden Ausführungsbeispielen anhand der Figuren der Zeichnung näher erläutert Es zeigt:
- Fig. 1: in einer schematisch stark vereinfachten Skizze eine beispielhafte Anordnung eines Siebrechens in einem beispielhaften Regenüberlauf;
- Fig. 2: in einer schematisch stark vereinfachten Skizze zwei Beispiele von Siebrechenoberflächen;
- Fig. 3: in einer schematisch vereinfachten Skizze die prinzipielle Wirkungsweise des erfindungsgemäßen Siebrechen-Reinigungsverfahrens;
- Fig.4: eine schematisch vereinfachte dreidimensionale Ansicht einer Ausführungsform einer erfindungsgemäßen Reinigungsvorrichtung, in eingebautem Zustand;
- Fig. 5: eine schematisch vereinfachte dreidimensionale Ansicht des in Fig. 4. gezeigten Siebrechens mit Anbauteilen, von der Schmutzwasserseite betrachtet;
- Fig. 6: eine schematisch vereinfachte dreidimensionale Ansicht des in Fig. 4 und 5 gezeigten Siebrechens mit Anbauteilen, von der Reinwasserseite betrachtet;
- Fig. 7: eine vergrößerte, schematisch vereinfachte dreidimensionale Teilansicht des in Fig. 4 bis 6 gezeigten Siebrechens, von der Schmutzwasserseite betrachtet, zur Verdeutlichung des Reinigungsvorgangs;
- Fig. 8: eine schematisch vereinfachte seitliche Ansicht des in Fig. 4 bis 7 gezeigten Siebrechens;
- Fig. 9: eine schematisch vereinfachte dreidimensionale Detailansicht der Pumpeneinheit der in Fig. 4 bis 8 gezeigten Reinigungsvorrichtung;
- Fig. 10: einen schematisch vereinfachten, vergrößerten, horizontalen Schnitt durch den in Fig. 4 bis 8 gezeigten Reinigungsabschnitt bzw. die dort gezeigte Reinigungsdüse; und
- Fig. 11: einen schematisch vereinfachten, vertikalen Schnitt durch die in Fig. 4 bis 10 gezeigte Ausführungsform einer Reinigungsvorrichtung für Siebrechen.

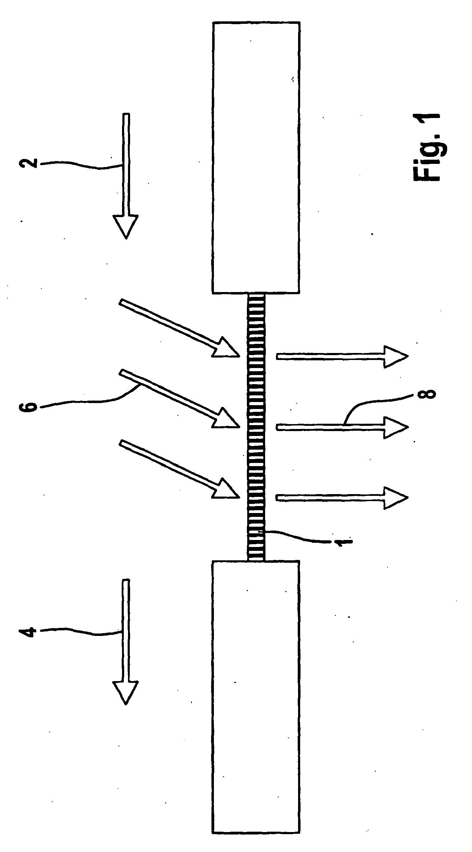

In Fig. 1 ist in einer schematisch skizzenhaft stark vereinfachten Darstellung eine beispielhafte Einbauvariante eines Siebrechens 1 in einem nicht näher dargestellten Regenüberlaufbauwerk gezeigt. Von einem Abwasserkanal heran geführtes Abwasser 2, das beispielsweise aus den Haushalten oder von Industrieanlagen eingeleitetes Abwasser, von versiegelten Freiflächen aufgenommenes Regenwasser usw. enthalten kann, strömt auf der Schmutzwasserseite - soweit dies der entsprechende Abflußquerschnitt zuläßt - als Abwasseranteil 4 direkt weiter durch den Abfluß des Regenüberlaufbauwerkes zu einer nicht näher dargestellten Kläranlage.

Die überschießende Abwassermenge bzw. jene Abwassermenge, die vom Abfluß zur Kläranlage beispielsweise bei kurzfristig hohen Wassermengen nicht sofort aufgenommen werden kann, strömt als Schmutzwasser 6 durch den Siebrechen 1 auf die Reinwasserseite in Richtung eines nicht weiter dargestellten Ablaufes ins Freie. Der Siebrechen 1 soll dabei Siebgut, welches mit dem Abwasser 2 bzw. Schmutzwasser 6 mit transportiert wird, zurückhalten und diesen zurück gehaltenen Schmutz konzentriert in den zur Kläranlage ablaufenden Abwasseranteil 4 geben. Das durch den Siebrechen 1 hindurch strömende Schmutzwasser 6 wird dabei vom mit transportierten Schmutz befreit und strömt als gereinigtes Wasser 8 auf der Reinwasserseite weiter ins Freie. Dabei erfüllt der Siebrechen 1 die Aufgabe, Schmutzpartikel, welche mit dem Abwasser 2 heran transportiert und mit dem Schmutzwasser 6 dem Siebrechen 1 zugeführt werden, zurückzuhalten.

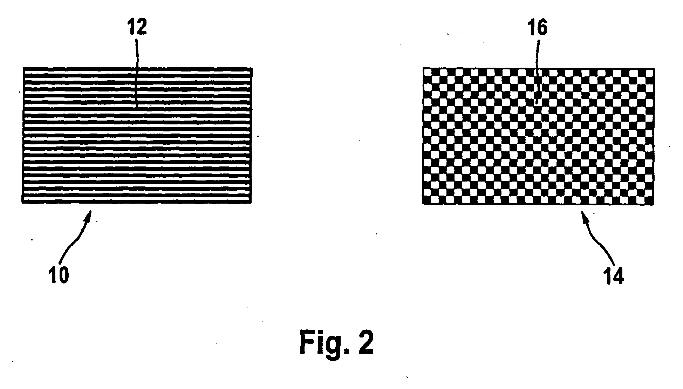

Wie in Fig. 2 schematisch stark vereinfacht skizziert kann bei einem Stabsiebrechen 10 nur eindimensional gefiltert bzw. gereinigt werden. Längliche Schmutzteile können zwischen den Rechenstäben 12 passieren. Demgegenüber kann mit einem Lochsiebrechen 14 in zwei Dimensionen filtriert werden. Längliche Schmutzteile können durch die Löcher 16 des Lochsiebrechens 14 nicht passieren. Allerdings besteht bei einem Lochsiebrechen 14 noch stärker als bei einem Stabsiebrechen 10 die Schwierigkeit, daß sich Schmutzanteile, die größer als der Durchmesser der Löcher 16 sind, durch die hydrostatische Kraft des durch den Lochsiebrechen 14 hindurch strömenden Schmutzwassers 6 an der Siebfläche anlegen und dort verbleiben. Damit verstopfen mit der Zeit die Löcher 16. Ohne Reinigung der Siebfläche nimmt damit die Durchflußleistung sehr schnell ab. Dies gilt analog für die Spalte zwischen den Stäben 12 eines Stabsiebrechen 10.

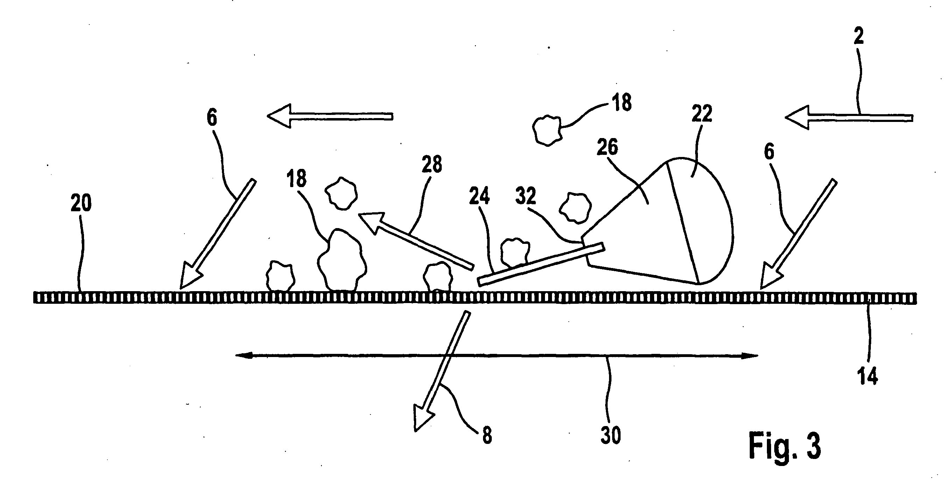

In Fig. 3 ist in einer schematisch vereinfachten Skizze die prinzipielle Wirkungsweise des erfindungsgemäßen Reinigungsverfahrens veranschaulicht. Der vom Abwasser 2 herangeführte Schmutz 18 setzt sich in größeren oder kleineren Partikeln an der schmutzwasserseitigen Oberfläche 20 des hier als Lochsiebrechen 14 ausgebildeten Siebrechens 1 ab. Das Schmutzwasser 6 wird beim Durchtritt durch den Lochsiebrechen 14 vom Schmutz 18 befreit und strömt als gereinigtes Wasser 8 auf der Reinwasserseite weiter. Zum Reinigen des Siebrechens 14 verfügt die Reinigungseinheit 22 über Mittel zum Erzeugen einer auf die Siebrechenoberfläche 20 mittels eines Reinigungsmediumsstrahls 24 hingerichteten Schubwirkung. Diese ist unter einem Winkel von beispielsweise weniger als 25° zur Siebrechenebene geneigt. Mit ihr ist eine vom Reinigungsabschnitt 26 zum Siebrechen 1 bzw. 14 gerichtete Reinigungskraft in der Weise zu erzeugen, daß an der Siebrechenoberfläche 20 anhaftender Schmutz 18 vom Reinigungsmediumsstrahl 24 anlösbar, von der Siebrechenoberfläche 20 ablösbar und mit dem Reinigungsmedium wegschwemmbar ist, wie dies mit dem Pfeil 28 symbolisiert ist. Der Doppelpfeil 30 symbolisiert dabei weiterhin die Verfahrbarkeit der Reinigungseinheit 22 relativ zum Siebrechen 14 in einer im wesentlichen parallel zum Siebrechen 14 liegenden Ebene. Der Reinigungsmediumsstrahl 24 tritt dabei aus einer Öffnung 32 aus dem Reinigungsabschnitt 26 aus.

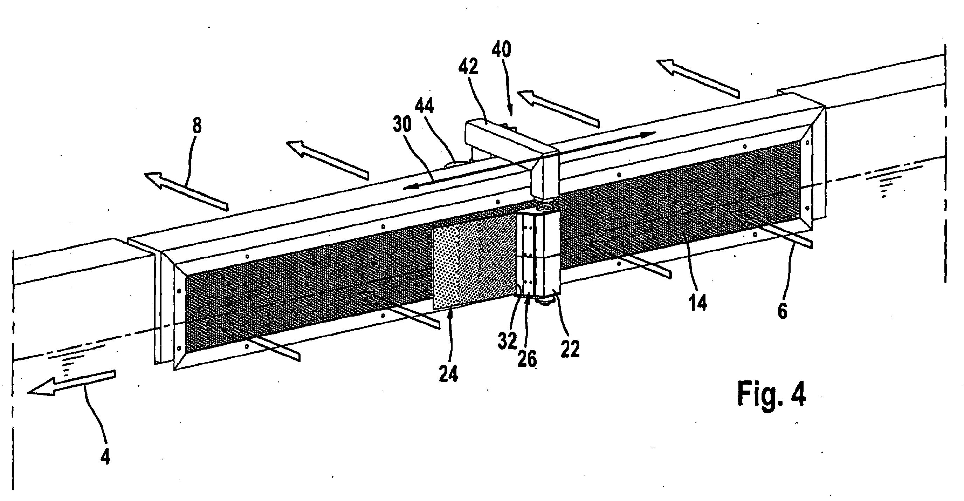

Die vorstehend in Fig. 3 schematisch vereinfacht erläuterte prinzipielle Wirkungsweise des erfindungsgemäßen Reinigungsverfahrens wird anhand der in Fig. 4 gezeigten Ausführungsform einer erfindungsgemäßen Reinigungsvorrichtung 40 weiter vertieft. Die schematisch vereinfacht dreidimensional dargestellte Reinigungsvorrichtung 40 dient zur Reinigung des hier wiederum als Lochsiebrechen 14 ausgebildeten Siebrechens 1. Auf der Schmutzwasserseite ist eine stromauf vor dem Siebrechen 14 angeordnete Reinigungseinheit 22 gezeigt. Der aus dem Reinigungsabschnitt 26 austretende Reinigungsmediumstrahl 24 ist in dieser Darstellung nach links gerichtet. Die Dicke des Reinigungsmediumsschwalls 24 nimmt mit zunehmender Entfernung von der Öffnung 32 ab, was durch die anfangs dunkle und dann zunehmend heller werdende Schattierung symbolisiert werden soll. Mit dem wasserrakelartigen Reinigungsschwall 24 ist eine besonders schonende und dennoch gründliche Reinigung des Siebrechens 14 erzielbar.

Gleiche oder gleichwirkende Baugruppen oder Teile werden im Folgenden zur Vereinfachung der Diskussion mit denselben Bezugszeichen belegt.

Die im Querschnitt im wesentlichen trapezförmig oder kastenartig ausgebildete Reinigungseinheit 22 bzw. deren spitz zulaufender Reinigungsabschnitt 26 kann auch als Düse bezeichnet werden. Die Reinigungseinheit 22 ist an einem Tragarm 42 befestigt, der den Siebrechen 14 übergreift und an dessen gegenüberliegen Abschnitt eine hier nur teilweise erkennbare Pumpeneinheit 44 befestigt ist. Mit der Pumpeneinheit 44 kann auf der Reinwasserseite gereinigtes Wasser 8 angesaugt, aufgenommen und durch den Tragarm 42 hindurch mit Überdruck in den Reinigungsabschnitt 26 gefördert und durch dessen Öffnung 32 hinaus gepreßt werden, so daß der gewünschte spatelartige Reinigungsmediumstrahl 24 entsteht.

Wenn das Reinigungsmedium von der Schmutzwasserseite her auf die Siebrechenoberfläche auftrifft, kann das Reinigungsmedium von der Pumpeneinheit 44 dem Reinigungsabschnitt 26 beispielsweise mit einem Überdruck kleiner als 20 bar zugeführt werden. Vorzugsweise werden dabei Förderdrücke von kleiner als 10 bar, bevorzugt kleiner als 2 bar, gewählt. Als besonders wirtschaftlich und zugleich ausreichend wirkungsvoll haben sich Drücke im Bereich von etwa 0,5 bar bis 1,5 bar, bevorzugt von 1,1 bar, gezeigt. Damit kann einerseits die Pumpeneinheit besonders robust ausgelegt werden, was eine hohe Standzeit und eine lange Lebenserwartung sicherstellen hilft. Zudem ist damit andererseits zugleich eine wirtschaftlich betreibbare, kostengünstige Lösung angegeben. Nicht zuletzt wird damit eine schonende und zugleich doch gründliche Reinigung der Siebrechenoberfläche erzielt, so daß sich dann auch der Siebrechen durch eine hohe Standzeit auszeichnet.

Sofern das Reinigungsmedium von der Reinwasserseite her auf die Siebrechenoberfläche auftrifft bzw. dieser zugeführt wird, haben sich die vorstehend diskutierte Drücke ebenfalls bewährt. Es kann bei Bedarf aber auch mit höheren Drücken gearbeitet werden. Das Reinigungsmedium kann dann beispielsweise mit einem Überdruck von 5 bar bis 20 bar, vorzugsweise von 10 bar bis 15 bar dem Reinigungsabschnitt 26 zugeführt werden.

Die über dem Tragarm 42 mit der Pumpeneinheit 44 verbundene Reinigungseinheit 22 bzw. Düse ist als gesamtes relativ zum Siebrechen 14 über dessen Längserstreckung verfahrbar, wie dies durch den Doppelpfeil 30 angedeutet ist.

Der Siebrechen 14 ist in an sich bekannter Weise in das hier nur schematisch dargestellte Regenüberlaufbauwerk eingebaut.

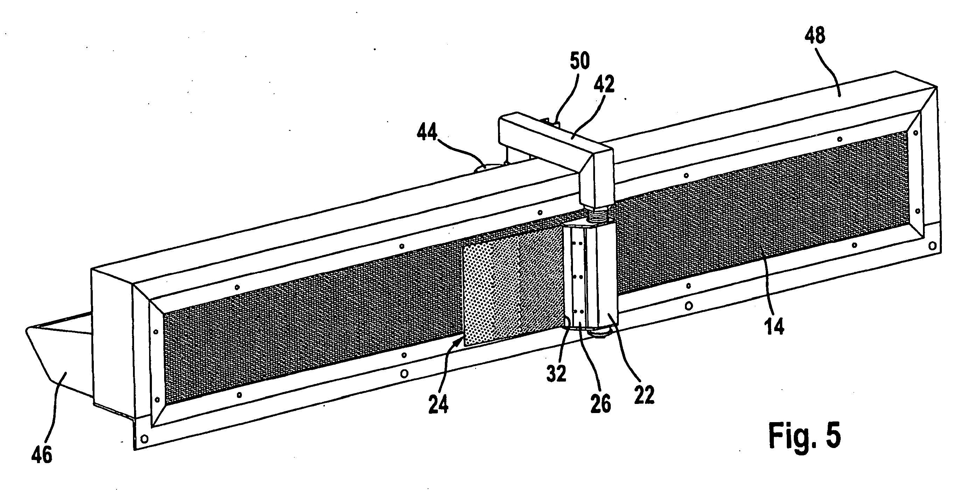

In Fig. 5 ist der in Fig. 4 gezeigte Siebrechen 14 ohne die ihn umgebenden Bauwerksabschnitte separat dargestellt. Hinter bzw. stromab nach dem Siebrechen 14 ist ein Staukasten 46 angeordnet. Das Lochsieb des Lochsiebrechens 14 ist auf einem stabilen Edelstahlrahmen 48 aufgespannt. Der Tragarm 42 stützt sich über ein hier als U-Profil dargestelltes Tragelement 50 an einem nicht weiter gezeigten Reinigungswagen 52 ab, der seinerseits in oder am Rahmen 48 in dessen Längsrichtung verschieblich bzw. verfahrbar geführt ist.

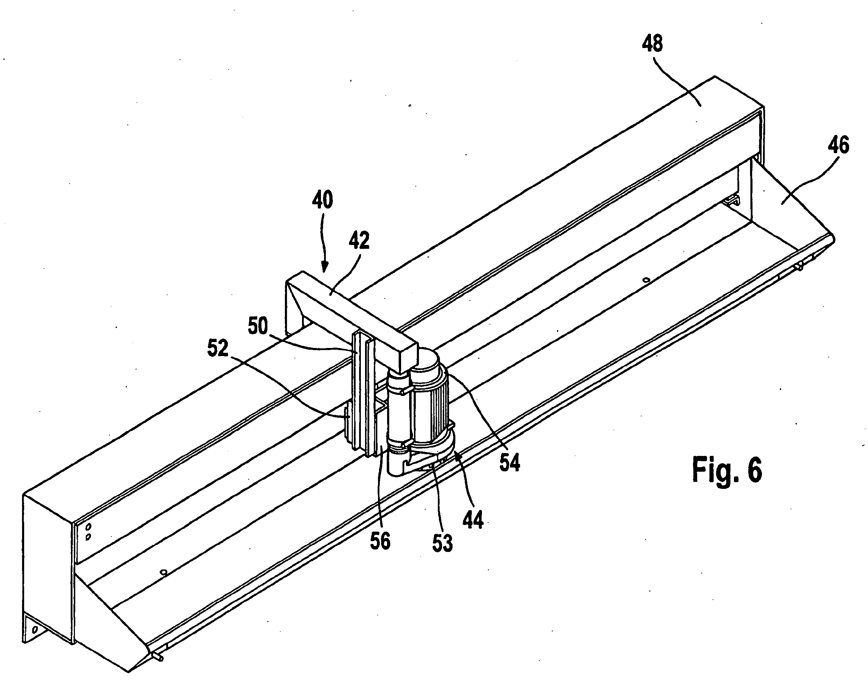

In Fig. 6 ist die in Fig. 4 und 5 gezeigte Lochsiebrechen-Reinigungsvorrichtung 40 von der Reinwasserseite her betrachtet. Gleiche oder gleichwirkende Bauteile oder Baugruppen werden weiterhin mit denselben Bezugszeichen zur Vereinfachung der Diskussion belegt.

Die Pumpeneinheit 44 taucht zumindest soweit in den Staukasten 46 ein, daß die Ansaugseite 53 der Pumpe 54 nicht trocken laufen kann, jedenfalls solange diese in Betrieb ist. Das U-profilfömige Tragelement 50 ist über weitere Trag- und Stützteile 56 einerseits mit der Pumpeneinheit 44 und andererseits mit dem Reinigungswagen 52 fest verbunden. Im Kopfprofil des Rahmens 48 ist bei der hier gezeigten Ausführungsform beispielsweise ein kolbenstangenloser Pneumatikzylinder eingebaut, welcher die mit dem Reinigungswagen 52 geführte Pumpeneinheit 44 und die am Tragarm 42 fest montierte Reinigungseinheit 22 relativ zum Siebrechen 14 längs verschieblich zu diesem antreibt. Die vom Pneumatikzylinder dabei mit ausgestoßene Luft kann zugleich als Luftpolster dienen, um die Führung und den Antrieb vor Wasser und Schmutzteilchen zu schützen und damit vor einem ungewollten Verschleiß zu bewahren. Die Pumpeneinheit 44 mit der Pumpe 54 ist auf der Siebrückseite bzw. auf der Reinwasserseite angeordnet und saugt somit filtriertes Wasser ohne Schmutzpartikel an und bringt es durch den als Leitung ausgebildeten Tragarm 42 hinüber zu der auf der Schmutzwasserseite angeordneten Düse bzw. Reinigungseinheit 22.

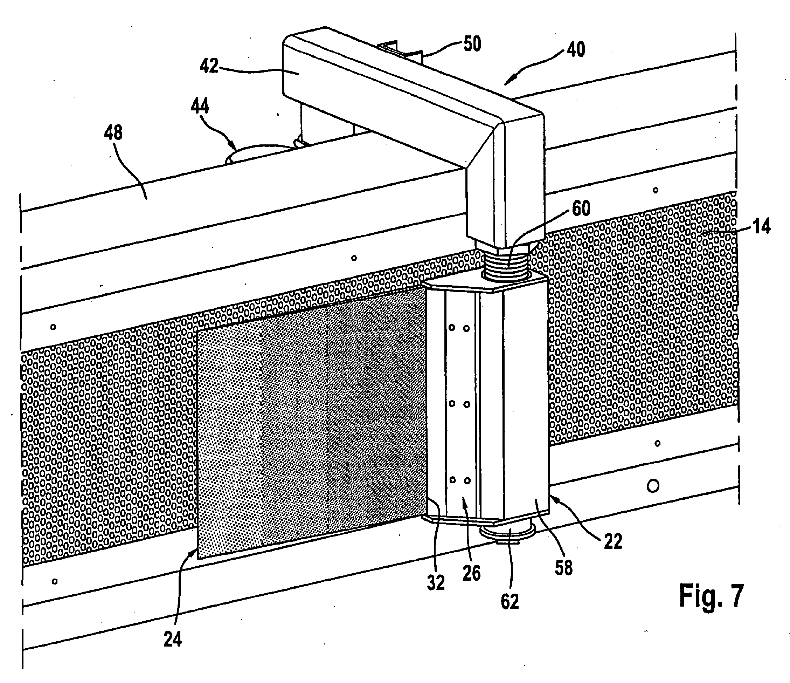

In Fig. 7 ist eine vergrößerte, schematisch wiederum vereinfachte, dreidimensionale Teilansicht zu den in Fig. 3 bis 6 gezeigten Siebrechen bzw. der dort gezeigten Reinigungseinheit 22 dargestellt, und zwar in dieser Darstellung von der Schmutzwasserseite her betrachtet.

Das im Querschnitt im wesentlichen trapezförmig ausgebildete, kastenartige Gehäuse 58 der Reinigungseinheit 22 bzw. des Reinigungsabschnitts 26 ist aus Edelstahlblechen aufgebaut. Es verfügt über eine Zuführleitung 60 zusammen mit dem Reinigungsmedium und, wie hier dargestellt, über eine Abführleitung 62, durch die gegebenenfalls zur Überdurckentlastung, zur Abfuhr von überschüssigem Reinigungsmedium oder zum Spülen der Düse bzw. der Reinigungseinheit 22 Reinigungsmedium bei Bedarf abfließen kann.

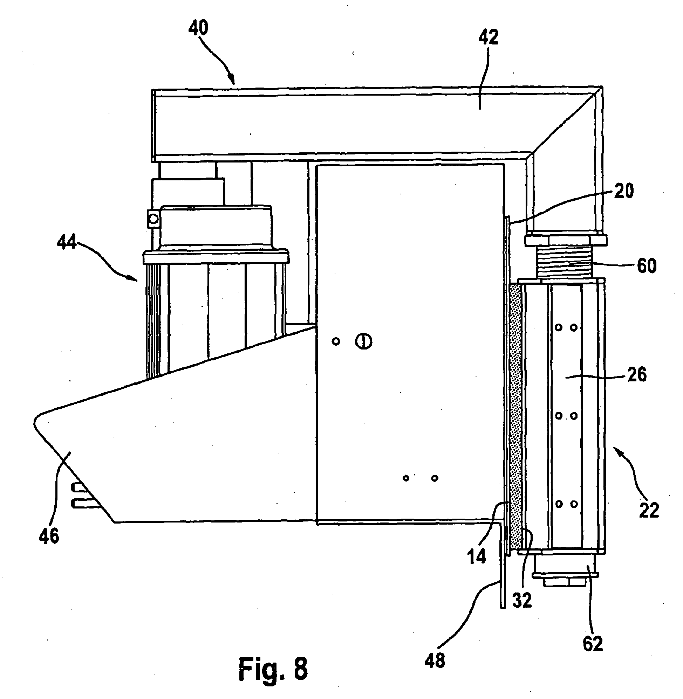

In Fig. 8 ist eine seitliche Ansicht des in Fig. 4 bis 7 gezeigten Siebrechens bzw. der dem Siebrechen zugeordneten Reinigungsvorrichtung 40 gezeigt. In dieser Darstellung wird deutlich, daß die Öffnung 32 der Düse bzw. der Reinigungseinheit 22 auf die Siebrechenoberfläche 20 des auf dem Rahmen 48 aufgespannten Lochsiebrechens 14 gerichtet ist. Dabei ist die Öffnung 32 von der Siebrechenoberfläche 20 beabstandet und berührt diese noch nicht. Der verbleibende Abstand zwischen Öffnung 32 und Siebrechenoberfläche 20 wird vom Reinigungswasser-Schwall 26 ausgefüllt.

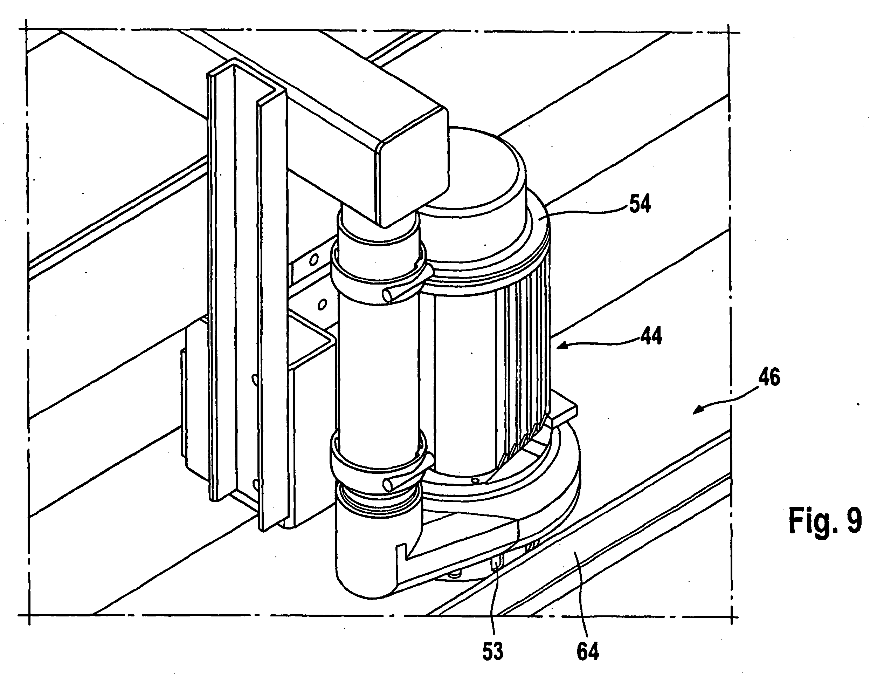

In Fig. 9 ist in einer wiederum schematisch vereinfachten dreidimensionalen Detailansicht die Pumpeneinheit 44 der in Fig. 4 bis 8 gezeigten Reinigungsvorrichtung 40 nochmals dargestellt. Dabei wird deutlich, daß das Staublech 64 des Staukastens 46 so ausgelegt werden kann, daß ein idealer Kompromiß zwischen Siebgeschwindigkeit und Entlastungsmenge entsteht, sowie gleichzeitig die Pumpe 54 eine ausreichende Reinigungswasserreserve im Bereich der Ansaugöffnung 53 behält.

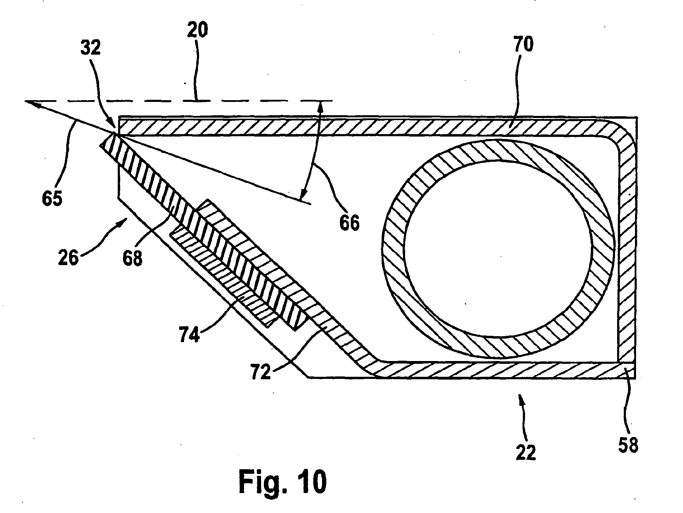

In Fig. 10 ist in einem schematisch vereinfachten, vergrößerten horizontalen Schnitt durch den in Fig. 4 bis 8 gezeigten Reinigungsabschnitt bzw. die dort gezeigte Reinigungsdüse 22 deren Aufbau näher erläutert. Dabei fällt die Blickrichtung von oben in die Reinigungsdüse 22 hinein. Dabei wird deutlich, daß die Mündungsrichtung 65 der Öffnung 32 in einem Winkel 66 von weniger als 25°, vorzugsweise weniger als 15° und besonders bevorzugt weniger als 5° zur Siebrechenoberfläche 20 geneigt ist.

In der hier dargestellten Ausführungsform ist die schlitzförmig ausgebildete Öffnung 32 von einem durch den Druck des anströmenden Reinigungsmediums an bzw. abhebbaren elastischen Element 68 und dem dazu benachbarten Gehäuseabschnitt 70, gegen den das elastische Element 68 anliegt, begrenzt. Das elastische Element 68 kann bevorzugt als Gummilippe oder Gummilappen ausgebildet sein. Es sind alternativ auch federnd vorgespannte Blech- oder Kunststoffteile denkbar. Je nach Elastizität und Rückfederungsvermögen des elastischen Elements 68 kann selbst bei gleich bleibenden geometrischen Ausgangsbedingungen, wie beispielsweise hier bei einem Winkel von 45° zwischen dem elastischen Element 68 und dem benachbarten Gehäuseabschnitt 70 ein hier zunächst daraus anfänglich resultierender Mündungsrichtungswinkel 66 von 22,5° eingestellt werden. Dieser Mündungsrichtungswinkel 66 kann mit zunehmendem Reinigungsmediumdruck und infolgedessen entsprechend zunehmendem Abheben des elastischen Elements 68 mit zugleich erfolgendem Öffnen des Schlitzes 32 abnehmen.

Ferner kann der Mündungsrichtungswinkel 66 des von der Schmutzwasserseite her auf die Siebrechenoberfläche auftreffenden Reinigungsmediumsstrahls 26 durch Drehen der Mündungsrichtung bzw. durch Drehen der Ausrichtung der schlitzförmigen Öffnung 32 so variiert werden, daß der Mündungsrichtungswinkel 66 gegen Null geht und der Reinigungsmediumstrahl näherungsweise parallel bzw. fast tangential auf der Siebrechenoberfläche auftrifft.

Eine fast tangentiale Ausrichtung des Reinigungsmediumsstrahls 26 kann mit einem Mündungsrichtungswinkels 66 um 0° erreicht werden. Ein Reinigungsmediumstrahl 26, der mit etwa 10° auf die Siebrechenoberfläche auftrifft, kann beispielsweise mit einem Mündungsrichtungswinkel 66 um 5° erreicht werden, wobei das anströmende Schmutzwasser, welches durch den Siebrechen hindurch strömt, den Reinigungsmediumstrahl 26 zusätzlich um einige Winkelgrade zur Siebrechenoberfläche hin ablenkt. Dieser Effekt hängt unter anderem von der anströmenden Wassermenge und deren Fließgeschwindigkeit ab.

Eine näherungsweise parallele bzw. fast tangentiale Ausrichtung des Mündungsrichtungswinkels 66 kann auch dadurch erreicht werden, daß das elastische Element 68 im Querschnitt betrachtet relativ lang ausgeführt wird und sich dabei ggf. in einem sanften Bogen beispielsweise über einen Teilabschnitt am gegenüberliegenden Gehäuseabschnitt 70 anschmiegt. Alternativ kann auch die Führung bzw. Richtungsbestimmung des Reinigungsmediumsstrahls durch eine verlängerte Ausführung des Gehäuseabschnitts 70 betont werden. Damit stehen je nach Anwendungsfall und Randbedingungen unterschiedliche Möglichkeiten zur Verfügung, um die Reinigungsqualität der flach an der Siebrechenoberfläche angreifenden Wasserrakel bzw. des Wasserspatels zu optimieren.

Dabei werden gerade bei Reinigungsmediumdrücken unterhalb von 10 bar, bevorzugt unterhalb von 2 bar, in Kombination mit einem Mündungsrichtungswinkel 66 von weniger als 25° bis gegen Null besonders gute Reinigungsergebnisse bei zugleich besonders schonender Reinigung des Siebrechens erzielt.

Sofern der Reinigungsmediumstrahl von der Reinwasserseite her auf die Siebrechenoberfläche auftrifft, hat sich ein Mündungsrichtungswinkel 66 auch im Bereich von 25° bis 45° als wirkungsvoll gezeigt, insbesondere in Verbindung mit Reinigungsdrücken zwischen 2 bar und 20 bar.

Das elastische Element 68 stützt sich gegen einen zum Gehäuseabschnitt 70 benachbarten Gehäuseteil 72 des Gehäuses 58 ab und ist beispielsweise mittels einer Edelstahlblechschiene 74 oder dergleichen gegen das Gehäuse 58 verspannt oder verschraubt. Die Düse 22 bzw. schlitzförmigen Öffnung 32 verteilt den Wasserschwall bzw. Reinigungmediumsstrahl 24 auf die gesamte Siebhöhe. Die Gummimatte 68 kann erforderlichenfalls bei grundsätzlich nie gänzlich auszuschließenden Verschmutzung an der Reinigungseinheit 22 durch das Reinigungsmedium mit einem dann von der Pumpe 54 entsprechend zu erzeugendem weiteren Überdruck selbst gereinigt werden. Ungeachtet dessen kann die Düse bzw. die Reinigungseinheit 22 bei Bedarf auch durch Öffnen der Abflußleitung 62 relativ einfach gereinigt und durchgespült werden.

Im Betrieb fährt die Reinigungseinheit 22 mit einer einstellbaren Geschwindigkeit vor dem Sieb 14 kontaktlos hin und her und treibt das dort anhaftende Siebgut in den zur Kläranlage führenden Abwasserkanal oder in den Siebgutschacht.

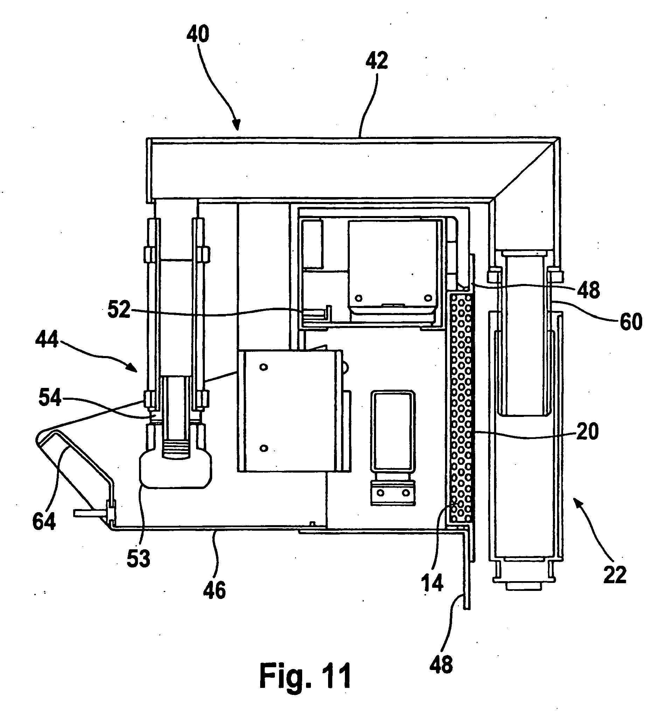

In Fig. 11 ist die in Fig.4 bis 10 dargestellte Ausführungsform einer Reinigungsvorrichtung 40 für den Siebrechen 14 zum besseren Verständnis in einem weiteren schematisch vereinfachten, vertikalen Schnitt durch gezeigt, so daß die jeweiligen Bezüge der Baugruppen relativ zueinander nochmals deutlich werden. Dabei werden gleiche oder gleichwirkende Bauteile oder Baugruppen abermals mit denselben Bezugszeichen belegt.

Die vorliegende Erfindung gibt eine Reinigungsvorrichtung für einen von mit Schmutz beladenem Wasser, wie beispielsweise Ab-, Regen- oder Mischwasser, durchströmten, in Abwasseranlagen, wie beispielsweise Abwasserkanälen, Regenüberlaufbauwerken oder dergleichen, verbauten Siebrechen an, der zur Reinigung des Schmutzwassers von mitgeführtem Schmutz, wie beispielsweise Fäkalien, Schwebstoffe oder dergleichen dient. Die Reinigungsvorrichtung weist einen dem Siebrechen zugeordneten Reinigungswagen auf, der relativ zum Siebrechen in einer im wesentlichen parallel zum Siebrechen liegenden Ebene verfahrbar ist. Der Reinigungswagen weist eine Reinigungseinheit mit einem den Siebrechen vom daran anhaftenden Schmutz säubernden Reinigungsabschnitt auf. Es wird erstmals angegeben, daß Die Reinigungseinheit über Mittel zum Erzeugen eines unter einem Winkel von weniger als 25° zur Siebrechenebene geneigten, im wesentlichen in Richtung der Siebrechenebene auf die Siebrechenoberfläche hin gerichteten Überdrucks verfügt. Damit ist eine vom Reinigungsabschnitt zum Siebrechen gerichtete Reinigungskraft derart erzeugbar, daß an der Siebrechenoberfläche anhaftender Schmutz von einem durch den Reinigungsabschnitt zirkulierenden und teilweise aus diesem durch eine Öffnung austretenden Reinigungsmedium anlösbar, von der Siebrechenoberfläche ablösbar und mit dem Reinigungsmedium wegschwemmbar ist. Die vorliegende Erfindung schlägt weiterhin einen mit der Reinigungsvorrichtung ausgestatteten Siebrechen vor und diskutiert ein Verfahren zu dessen Reinigung.

## Patentansprüche

1. Reinigungsvorrichtung für einen von mit Schmutz beladenem Wasser, wie beispielsweise Ab-, Regen- oder Mischwasser, durchströmten, in Abwasseranlagen, wie beispielsweise Abwasserkanälen, Regenüberlaufbauwerken oder dergleichen, verbauten Siebrechen (1; 10; 14), zur Reinigung des Schmutzwassers (6) von mitgeführtem Schmutz (18), wie beispielsweise Fäkalien, Schwebstoffen oder dergleichen,
mit einem dem Siebrechen (1; 10; 14) zugeordneten Reinigungswagen (52), der relativ zum Siebrechen (1; 10; 14) in einer im wesentlichen parallel zum Siebrechen (1; 10; 14) liegenden Ebene verfahrbar ist,
wobei der Reinigungswagen (52) eine Reinigungseinheit (22) mit einem den Siebrechen (1; 10; 14) vom daran anhaftenden Schmutz säubernden Reinigungsabschnitt (26) aufweist,
**dadurch gekennzeichnet, daß**
die Reinigungseinheit (22) Mittel zum Erzeugen einer auf die Siebrechenoberfläche (20) hin gerichteten, am Reinigungsabschnitt (26) vorherrschenden Schubwirkung aufweist, welche unter einem Winkel (66) von weniger als 45° zur Siebrechenebene geneigt ist, und mit der eine vom Reinigungsabschnitt (26) zum Siebrechen (1; 10; 14) gerichtete Reinigungskraft derart erzeugbar ist, daß an der Siebrechenoberfläche (20) anhaftender Schmutz (18) mit der zum Siebrechen (1; 10; 14) gerichteten Reinigungskraft von einem durch den Reinigungsabschnitt (26) strömenden und aus diesem durch eine Öffnung (32) austretenden flüssigen Reinigungsmedium gebildeten Reinigungsmedium-Schwall (24) anlösbar, von der Siebrechenoberfläche (20) ablösbar und mit dem Reinigungsmedium-Schwall (24) wegschwemmbar ist, wobei
die Öffnung (32) als ein sich über die Länge des Reinigungsabschnitts (26) erstreckender Schlitz ausgebildet ist, und wobei
der Schlitz (32) von einem durch den Reinigungsmediumdruck anhebbaren elastischen Element (68), vorzugsweise einer Gummilippe oder einem Gummilappen, und einem Gehäuseabschnitt (70), gegen den das elastische Element (68) anliegt, begrenzt wird.

2. Reinigungsvorrichtung (40) nach Anspruch 1, **dadurch gekennzeichnet, daß** der Reinigungsabschnitt (26) stromauf in Durchströmrichtung des Schmutzwassers (8) vor dem Siebrechen (1; 10; 14) angeordnet ist.

3. Reinigungsvorrichtung (40) nach Anspruch 1 oder 2, **dadurch gekennzeichnet, daß** der Reinigungsabschnitt (26) sich zumindest teilweise, vorzugsweise vollständig, über die Breite oder die Höhe des Siebrechens (1; 10; 14) erstreckt, wobei die Längsachse des Reinigungsabschnitts (26) im wesentlichen parallel zur Siebrechenebene orientiert ist.

4. Reinigungsvorrichtung (40) nach einem der Ansprüche 1 bis 3, **dadurch gekennzeichnet, daß** die Mündungsrichtung (65) der Öffnung (32) in einem Winkel (66) von weniger als 25°, vorzugsweise weniger als 15°, und besonders bevorzugt weniger als 5° zur Siebrechenoberfläche (20) geneigt ist.

5. Reinigungsvorrichtung (40) nach einem der Ansprüche 1 bis 4, **dadurch gekennzeichnet, daß** das Reinigungsmedium das auf einer Reinwasserseite gereinigt vorliegende Wasser (8) ist.

6. Reinigungsvorrichtung (40) nach einem der Ansprüche 1 bis 5, **dadurch gekennzeichnet, daß** der Reinigungsabschnitt (26) eine Zuführleitung (60) zur Versorgung mit, vorzugsweise von der Reinwasserseite heran geführtem, Reinigungsmedium und ggf. eine Abführleitung (62) oder Überdruckentlastungsöffnung zur Abfuhr von überschüssigem Reinigungsmedium aufweist.

7. Reinigungsvorrichtung (40) nach einem der Ansprüche 1 bis 6, **dadurch gekennzeichnet, daß** der Reinigungsabschnitt (26) ein im Querschnitt zumindest abschnittsweise im wesentlichen trapezförmiges Gehäuse (58) aufweist, durch welches das Reinigungsmedium hindurch förderbar ist, wobei das Reinigungsabschnittsgehäuse (58) eine der Siebrechenoberfläche (20) zugewandte Öffnung (32) aufweist, durch welche das Reinigungsmedium unter einem Winkel (66) von weniger als 45°, vorzugsweise weniger als 35°, besonders bevorzugt näherungsweise 0°, zur Siebrechenoberfläche (20) in einem gerichteten Reinigungsmedium-Schwall (24) heraus führbar ist, so daß damit an der Siebrechenoberfläche (20) anhaftender Schmutz (18) vom Reinigungsmedium-Schwall (24) abhebbar und wegschwemmbar ist.

8. Reinigungsvorrichtung nach einem der Ansprüche 1 bis 7, **dadurch gekennzeichnet, daß** das Reinigungsmedium zum Erzeugen des Überdrucks in Rotation versetzbar und rotierend an der Siebrechenoberfläche vorbei führbar ist.

9. Reinigungsvorrichtung nach Anspruch 8, **dadurch gekennzeichnet, daß** der Drallvektor des rotierenden Reinigungsmediums im wesentlichen Parallel zur Siebrechenebene und/oder zur Längsachse des Reinigungsabschnitts ausgerichtet ist.

10. Reinigungsvorrichtung nach einem der Ansprüche 8 oder 9 **dadurch gekennzeichnet, daß** das rotierende Reinigungsmedium zusätzlich zur Rotation eine translatorische Bewegungskomponente in Richtung des Drallvektors und/oder in Richtung der Längsachse des Reinigungsabschnitts aufweist.

11. Reinigungsvorrichtung nach einem der Ansprüche 8 bis 10, **dadurch gekennzeichnet, daß** der Reinigungsabschnitt ein im Querschnitt zumindest abschnittsweise im wesentlichen kreis- und/oder spiralförmiges Gehäuse aufweist, durch welches das um die Längsachse des Reinigungsabschnitts rotierende Reinigungsmedium hindurch förderbar ist, wobei das Reinigungsabschnittsgehäuse eine der Siebrechenoberfläche zugewandte Öffnung aufweist, durch welche ein Teil des rotierenden Reinigungsmediums unter einem Winkel von weniger als 45°, vorzugsweise weniger als 35°, besonders bevorzugt näherungsweise 0°, zur Siebrechenoberfläche in einem gerichteten Reinigungsmedium-Schwall heraus führbar ist, so daß damit an der Siebrechenoberfläche anhaftender Schmutz vom Reinigungsmedium-Schwall abhebbar und wegschwemmbar ist.

12. Reinigungsvorrichtung nach einem der Ansprüche 8 bis 11, **dadurch gekennzeichnet, daß** das Reinigungsmedium mittels der Zuführleitung dem Reinigungsabschnitt tangential unter Erzeugung eines Dralls zuführbar ist.

13. Reinigungsvorrichtung nach einem der Ansprüche 8 bis 12, **dadurch gekennzeichnet, daß** der Reinigungsabschnitt eine sich in Längsrichtung des Reinigungsabschnitts erstreckende, vorzugsweise rotierende, Wendel aufweist, mittels der das hindurch geführte Reinigungsmedium in Rotation versetzbar ist.

14. Reinigungsvorrichtung nach einem der Ansprüche 1 bis 13, **dadurch gekennzeichnet, daß** die Reinigungsvorrichtung (40) eine Pumpe (54) enthält.

15. Reinigungsvorrichtung nach einem der Ansprüche 1 bis 14, **dadurch gekennzeichnet, daß** der Siebrechen (1; 10; 14) ein Lochsiebrechen (14) oder ein Stabsiebrechen (10) ist.

16. Reinigungsvorrichtung nach Anspruch 1, **dadurch gekennzeichnet, daß** die auf die Siebrechenoberfläche (20) hin gerichtete, am Reinigungsabschnitt (26) vorherrschende Schubwirkung unter einem Winkel (66) von weniger als 35°, vorzugsweise näherungsweise 0°, zur Siebrechenebene geneigt ist.

17. Siebrechen (1; 10; 14) für Abwasseranlagen, wie beispielsweise Abwasserkanäle, Regenüberlaufbauwerke oder dergleichen, mit einer dem Siebrechen (1; 10; 14) zugeordneten Reinigungsvorrichtung gemäß Ansprüchen 1-16.

18. Verfahren zum Reinigen von in Abwasseranlagen, wie beispielsweise Abwasserkanälen, Regenüberlaufbauwerken oder dergleichen, verbauten Siebrechen (1; 10; 14), die von Schmutzwasser, wie beispielsweise Ab-, Regen- oder Mischwasser, durchströmt sind, unter Verwendung einer Reinigungsvorrichtung (40) nach wenigstens einem der Ansprüche 1 bis 16,
**dadurch gekennzeichnet, daß**
ein flüssiges Reinigungsmedium dem Siebrechen (1; 10; 14) zugeführt und mit einem, vorzugsweise auf der Schmutzwasserseite angeordneten, Reinigungsabschnitt (26) der Reinigungsvorrichtung (40) an der Siebrechenoberfläche (20) derart eine am Reinigungsabschnitt (26) vorherrschende Schubwirkung erzeugend vorbei gerührt wird, daß die Schubwirkung unter einem Winkel (66) von weniger als 45° zur Siebrechenebene geneigt ist, und daß an der Siebrechenoberfläche (20) anhaftender Schmutz (18) mit einer zum Siebrechen (1; 10; 14) hin gerichteten Reinigungskraft von einem Reinigungsmedium-Schwall (24), der von dem aus dem Reinigungsabschnitt (26) durch eine Öffnung (32) austretenden flüssigen Reinigungsmedium gebildet ist, abgelöst und weggeführt wird.

19. Verfahren nach Anspruch 18, **dadurch gekennzeichnet, daß** als Reinigungsmedium das in der Abwasseranlage auf der Schmutzwasserseite vorhandene Schmutzwasser (2; 4; 6) genutzt wird.

20. Verfahren nach Anspruch 18, **dadurch gekennzeichnet, daß** als Reinigungsmedium das stromab nach dem Siebrechen (1; 10; 14) auf der Reinwasserseite gereinigt vorliegende Wasser (8) genutzt wird.

21. Verfahren nach einem der Ansprüche 18 bis 20, **dadurch gekennzeichnet, daß** das Reinigungsmedium durch ein im Querschnitt zumindest abschnittsweise im wesentlichen trapezförmiges Gehäuse (58) des Reinigungsabschnitts (26) hindurch gefördert wird, wobei das Reinigungsabschnittsgehäuse (58) eine der Siebrechenoberfläche (20) zugewandte Öffnung (32) aufweist, durch welche zumindest ein Teil des Reinigungsmediums unter einem Winkel (66) von weniger als 25° zur Siebrechenoberfläche (20) in einem gerichteten Reinigungsmedium-Schwall (24) heraus strömt, so daß damit an der Siebrechenoberfläche anhaftender Schmutz (18) vom Reinigungsmedium-Schwall (24) angehoben und weggeschwemmt wird.

22. Verfahren nach einem der Ansprüche 18 bis 20, **dadurch gekennzeichnet, daß** das Reinigungsmedium derart in Rotation versetzt wird, daß der Drallvektor des rotierenden Reinigungsmediums im wesentlichen parallel zur Siebrechenebene und/oder zur Längsachse des Reinigungsabschnitts ausgerichtet ist.

23. Verfahren nach Anspruch 22, **dadurch gekennzeichnet, daß** dem rotierenden Reinigungsmedium zusätzlich eine translatorische Bewegungskomponente in Richtung des Drallvektors und/oder in Richtung der Längsachse des Reinigungsabschnitts aufgeprägt wird.

24. Verfahren nach Anspruch 22 oder 23, **dadurch gekennzeichnet, daß** das um die Längsachse des Reinigungsabschnitts rotierende Reinigungsmedium durch ein im Querschnitt zumindest abschnittsweise im wesentlichen kreis- und/oder spiralförmiges Gehäuse des Reinigungsabschnitts hindurch gefördert wird, wobei das Reinigungsabschnittsgehäuse eine der Siebrechenoberfläche zugewandte Öffnung aufweist, durch welche ein Teil des rotierenden Reinigungsmediums unter einem Winkel von weniger als 25° zur Siebrechenoberfläche in einem gerichteten Reinigungsmedium-Schwall heraus strömt, so daß damit an der Siebrechenoberfläche anhaftender Schmutz vom Reinigungsmedium-Schwall angehoben und weggeschwemmt wird.

25. Verfahren nach einem der Ansprüche 22 bis 24, **dadurch gekennzeichnet, daß** das Reinigungsmedium dem Reinigungsabschnitt tangential unter Erzeugung eines Dralls zugeführt wird.

26. Verfahren nach einem der Ansprüche 22 bis 25, **dadurch gekennzeichnet, daß** das durch den Reinigungsabschnitt hindurch strömende Reinigungsmedium mit einer sich in Längsrichtung des Reinigungsabschnitts erstreckenden, vorzugsweise rotierenden, Wendel in Rotation versetzt wird.

27. Verfahren nach Anspruch 18, **dadurch gekennzeichnet, daß** die Schubwirkung unter einem Winkel (66) von weniger als 35°, vorzugsweise näherungsweise 0°, zur Siebrechenebene geneigt ist.

## Claims

1. A cleaning device for a sieve grid (1; 10; 14) incorporated in waste water plants such as, e.g., sewers, rain overflow structures, etc., and coursed through by water freighted with impurities, such as, e.g., waste water, rainwater or mixed water, for cleaning the sewage (6) of impurities (18) carried along such as, e.g., fecal matter, suspended matter, or the like,
comprising a cleaning car (52) associated with the sieve grid (1; 10; 14), which is movable relative to the sieve grid (1; 10; 14) in a plane substantially situated in parallel with the sieve grid (1; 10; 14),
wherein the cleaning- car (52) comprises a cleaning unit (22) comprising a cleaning section (26) for cleaning the sieve grid (1; 10; 14) of impurities adhering thereto,
**characterized in that**
the cleaning unit (22) comprises means for generating a thrusting effect directed at the sieve grid surface (20) and prevailing at the cleaning section (26), which is inclined at an angle (66) of less than 45°relative to the plane of the sieve grid, and whereby a cleaning force directed from the cleaning section (26) to the sieve grid (1; 10; 14) may be generated such that impurities (18) adhering to the sieve grid surface (20) may be softened up by the cleaning force directed to the sieve grid (1; 10; 14) of a cleaning medium gush (24) formed by a liquid cleaning medium flowing through the cleaning section (26) and exiting from the latter through an opening (32), detached from the sieve grid surface (20), and washed away together with the cleaning medium (24),wherein
the opening (32) has the form of a slot extending across the length of the cleaning section (26), and wherein
the slot (32) is delimited by an elastic element (68) adapted to be raised by the cleaning medium pressure, preferably a rubber lip or a rubber flap, and a housing portion (70) against which the elastic element (68) is in contact.

2. The cleaning device (40) in accordance with claim 1, **characterized in that** the cleaning section (26) is arranged upstream in the direction of flow of the sewage (8) in front of the sieve grid (1; 10; 14).

3. The cleaning device (40) in accordance with claim 1 or 2, **characterized in that** the cleaning section (26) extends at least partly, preferably completely, across the width or the height of the sieve grid (1; 10; 14), with the longitudinal axis of the cleaning section (26) being oriented substantially in parallel with the plane of the sieve grid.

4. The cleaning device (40) in accordance with any one of claims 1 to 3, **characterized in that** the outlet direction (65) of the opening (32) is inclined at an angle (66) of less than 25°, preferably less than 15°, and in a particularly preferred manner less than 5° relative to the sieve grid surface (20).

5. The cleaning device (40) in accordance with any one of claims 1 to 4, **characterized in that** the cleaning medium is the water (8) present in a cleaned condition on a pure-water side.

6. The cleaning device (40) in accordance with any one of claims 1 to 5, **characterized in that** the cleaning section (26) comprises a supply line (60) for the supply with cleaning medium preferably supplied from the pure-water side, and optionally a discharge line (62) or overpressure relief opening for discharging any excess cleaning medium.

7. The cleaning device(40) in accordance with any one of claims 1 to 6, **characterized in that** the cleaning section (26) has a housing (58) having at least in portions thereof a substantially trapezoid shape in the cross-section, through which the cleaning medium may be conveyed, with the cleaning section housing (58) including an opening (32) facing the sieve grid surface (20), through which the cleaning medium may be directed out at an angle (66) of less than 45°, preferably less than 35°, in a particularly preferred manner approximately 0° relative to the sieve grid surface (20) in a directed gush of cleaning medium (24), so that impurities (18) adhering to the sieve grid surface (20) may thereby be lifted off and washed away by the gush of cleaning medium (24).

8. The cleaning device in accordance with any one of claims 1 to 7, **characterized in that** the cleaning medium may be made to rotate and rotatingly passed by the sieve grid surface in order to generate the overpressure.

9. The cleaning device in accordance with claim 8, **characterized in that** the spin vector of the rotating cleaning medium is directed substantially in parallel with the plane of the sieve grid and/or with the longitudinal axis of the cleaning section.

10. The cleaning device in accordance with any one of claims 8 or 9, **characterized in that** the rotating cleaning medium has in addition to the rotation a translational component of movement in the direction of the spin vector and/or in the direction of the longitudinal axis of the cleaning section.

11. The cleaning device in accordance with any one of claims 8 to 10, **characterized in that** the cleaning section comprises a housing which is substantially circular and/or spiral-shaped in cross-section at least in portions thereof, through which the cleaning medium rotating about the longitudinal axis of the cleaning section may be conveyed, with the cleaning section housing having an opening facing the sieve grid surface, through which part of the rotating cleaning medium may be directed out at an angle of less than 45°, preferably less than 35°, in a particularly preferred manner approximately 0°, to the sieve grid surface in a directed gush of cleaning medium, so that impurities adhering to the sieve grid surface may thereby be lifted off and washed away by the gush of cleaning medium.

12. The cleaning device in accordance with any one of claims 8 to 11, **characterized in that** the cleaning medium may be supplied tangentially to the cleaning section by means of the supply line while producing a spin.

13. The cleaning device in accordance with any one of claims 8 to 12, **characterized in that** the cleaning section comprises a helix extending in the longitudinal direction of the cleaning section, preferably rotating, whereby the cleaning medium passed through it may be made to rotate.

14. The cleaning device in accordance with any one of claims 1 to 13, **characterized in that** the cleaning device (40) contains a pump (54).

15. The cleaning device in accordance with any one of claims 1 to 14, **characterized in that** the sieve grid (1; 10; 14) is a punched screen grid (14) or a bar sieve grid (10).

16. The cleaning device in accordance with claim 1, **characterized in that** the thrusting effect directed at the sieve grid surface (20) and prevailing at the cleaning section (26) is inclined at an angle (66) of less than 35°, preferably approximately 0°, relative to the plane of the sieve grid.

17. A sieve grid (1; 10; 14) for use in waste water plants such as, e.g., sewers, rain overflow structures, etc., comprising a sieve grid (1; 10; 14) associated with the cleaning device (40) according to claims 1 to 16.

18. A method for cleaning sieve grids (1; 10; 14) incorporated in waste water plants such as, e.g., sewers, rain overflow structures or the like, which are course through by sewage such as, e.g., waste water, rainwater or mixed water, by using a cleaning device (40) in accordance with at least one of claims 1 to 16,
**characterized in that**
a liquid cleaning medium is supplied to the sieve grid (1; 10; 14) and is passed by the sieve grid surface (20) with the aid of a cleaning section (26) of the cleaning device (40) preferably arranged on the sewage side while generating a thrusting effect prevailing at the cleaning section (26) such that the thrusting effect is inclined relative to the plane of the sieve grid at an angle (66) of less than 45°and that impurities (18) adhering to the sieve grid surface (20) are detached and carried off with a cleaning force directed towards the sieve grid (1; 10; 14) by a gush of cleaning medium (24) formed by the liquid cleaning medium exiting from the cleaning section (26) through an opening (32).

19. The method in accordance with claim 18, **characterized in that** the sewage (2; 4; 6) present in the waste water plant on the sewage side is utilized as the cleaning medium.

20. The method in accordance with claim 18, **characterized in that** the water (8) present downstream behind the sieve grid (1; 10; 14) on the pure-water side in the purified condition is utilized as the cleaning medium.

21. The method in accordance with any one of claims 18 to 20, **characterized in that** the cleaning medium is conveyed through a housing (58) of the cleaning section (26) having at least in portions thereof a substantially trapezoid shape in the cross-section, wherein the cleaning section housing (58) includes an opening (32) facing the sieve grid surface (20), through which at least a part of the cleaning medium flows out at an angle (66) of less than 25° relative to the sieve grid surface (20) in a directed gush of cleaning medium (24), so that impurities adhering to the sieve grid surface (18) are thereby lifted off and washed away by the gush of cleaning medium (24).

22. The method in accordance with any one of claims 18 to 20, **characterized in that** the cleaning medium is made to rotate such that the spin vector of the rotating cleaning medium is oriented substantially in parallel with the plane of the sieve grid and/or with the longitudinal axis of the cleaning section.

23. The method in accordance with claim 22, **characterized in that** the rotating cleaning medium is additionally imprinted with a translational component of movement in the direction of the spin vector and/or in the direction of the longitudinal axis of the cleaning section.

24. The method in accordance with claim 22 or 23, **characterized in that** the cleaning medium rotating about the longitudinal axis of the cleaning section is conveyed through a housing of the cleaning section which is substantially circular and/or spiral-shaped in cross-section at least in portions thereof , wherein the cleaning section housing includes an opening facing the sieve grid surface through which a part of the rotating cleaning medium flows out at an angle of less than 25° relative to the sieve grid surface in a directed gush of cleaning medium, so that impurities adhering to the sieve grid surface are thereby lifted off and washed away by the gush of cleaning medium.

25. The method in accordance with any one of claims 22 to 24, **characterized in that** the cleaning medium is supplied tangentially to the cleaning section while producing a spin.

26. The method in accordance with any one of claims 22 to 2257, **characterized in that** the cleaning medium flowing through the cleaning section is made to rotate by means of a helix, preferably rotating, which extends in the longitudinal direction of the cleaning section.

27. The method in accordance with claim 18, **characterized in that** thrusting effect is inclined relative to the plane of the sieve grid at an angle (66) of less than 35°, preferrably approximately 0°.

## Revendications

1. Dispositif de nettoyage pour une grille de retenue (1 ; 10 ; 14), qui est montée dans des installations de vidange d'eaux usées, telles que des canalisations d'eaux usées, des déversoirs d'eau de pluie ou similaires et à travers laquelle circule l'eau chargée de saletés, telle que des eaux usées, l'eau de pluie ou l'eau mixte, en vue de débarrasser l'eau polluée (6) des saletés (18) entraînées, telles que des matières fécales, des matières en suspension ou similaires,
comportant un chariot de nettoyage (52) associé à la grille de retenue (1 ; 10 ; 14), lequel est mobile par rapport à la grille de retenue (1 ; 10 ; 14) dans un plan sensiblement parallèle à la grille de retenue (1 ; 10 ; 14),
le chariot de nettoyage (52) comportant une unité de nettoyage (22) avec une partie de nettoyage (26) éliminant les saletés adhérant à la grille de retenue (1 ; 10 ; 14),
**caractérisé en ce que**
l'unité de nettoyage (22) comporte des moyens destinés à générer une poussée, qui prédomine dans la partie de nettoyage (26) et est dirigée vers la surface de grille (20), qui est inclinée par rapport au plan de la grille de retenue selon un angle (66) inférieur à 45° et avec laquelle peut être générée une force de nettoyage dirigée depuis la partie de nettoyage (26) vers la grille de retenue (1 ; 10 ; 14), **en ce que** les saletés (18) adhérant à la surface de grille (20) peuvent en être détachées au moyen de la force de nettoyage orientée vers la grille de retenue (1 ; 10 ; 14) par un jet de fluide de nettoyage (24) projeté à travers la partie de nettoyage (26) et formé par un fluide de nettoyage liquide sortant d'une ouverture (32), peuvent être détachées de la surface de grille (20) et être emportées par le jet de fluide de nettoyage (24),
l'ouverture (32) étant réalisée sous forme de fente s'étendant sur la longueur de la partie de nettoyage (26), et
la fente (32) étant délimitée par un élément élastique (68), de préférence une lèvre en caoutchouc ou une patte en caoutchouc, apte à être soulevé par la pression du fluide de nettoyage, et par une partie de boîtier (70) sur laquelle l'élément élastique (68) prend appui.

2. Dispositif de nettoyage (40) selon la revendication 1, **caractérisé en ce que** la partie de nettoyage (26) est disposée, par référence au sens d'écoulement des eaux polluées (8), en amont de la grille de retenue (1 ; 10 ; 14).

3. Dispositif de nettoyage (40) selon la revendication 1 ou 2, **caractérisé en ce que** la partie de nettoyage (26) s'étend au moins en partie, de préférence en totalité, sur la largeur ou la hauteur de la grille de retenue (1 ; 10 ; 14), l'axe longitudinal de la partie de nettoyage (26) étant orienté sensiblement parallèlement au plan de la grille de retenue.

4. Dispositif de nettoyage (40) selon l'une quelconque des revendications 1 à 3, **caractérisé en ce que** la direction d'embouchure (65) de l'ouverture (32) est inclinée par rapport à la surface de grille (20) selon un angle (66) inférieur à 25°, de préférence inférieur à 15°, et encore mieux inférieur à 5°.

5. Dispositif de nettoyage (40) selon l'une quelconque des revendications 1 à 4, **caractérisé en ce que** le fluide de nettoyage est l'eau épurée (8), présente sur un côté d'eau propre.

6. Dispositif de nettoyage (40) selon l'une quelconque des revendications 1 à 5, **caractérisé en ce que** la partie de nettoyage (26) comporte une conduite d'amenée (60) pour l'alimentation en fluide de nettoyage, acheminé de préférence depuis le côté d'eau propre, et, le cas échéant, une conduite d'évacuation (62) ou une ouverture de détente de surpression pour évacuer le fluide de nettoyage excédentaire.

7. Dispositif de nettoyage (40) selon l'une quelconque des revendications 1 à 6, **caractérisé en ce que** la partie de nettoyage (26) comporte un boîtier (58) avec une section sensiblement trapézoïdale au moins par zones, à travers lequel le fluide de nettoyage peut circuler, ledit boîtier (58) comportant une ouverture (32), qui est orientée vers la surface de grille (20) et à travers laquelle le fluide de nettoyage peut être évacué dans un jet de fluide de nettoyage (24) dirigé, en formant avec la surface de grille (20) un angle (66) inférieur à 45°, de préférence inférieur à 35°, encore mieux à peu près égal à 0°, de telle sorte que, de ce fait, les saletés (18) adhérant à la surface de grille (20) peuvent être soulevées par le jet de fluide de nettoyage (24) et être emportées.

8. Dispositif de nettoyage selon l'une quelconque des revendications 1 à 7, **caractérisé en ce que** le fluide de nettoyage peut être mis en rotation pour générer la surpression et, tout en tournant, peut être guidé le long de la surface de grille.

9. Dispositif de nettoyage selon la revendication 8, **caractérisé en ce que** le vecteur du moment cinétique du fluide de nettoyage entraîné en rotation est sensiblement parallèle au plan de la grille de retenue et/ou à l'axe longitudinal de la partie de nettoyage.

10. Dispositif de nettoyage selon la revendication 8 ou 9, **caractérisé en ce qu'**une composante de translation, orientée dans la direction du vecteur de moment cinétique et/ou dans la direction de l'axe longitudinal de la partie de nettoyage, est imprimée, en plus du mouvement de rotation, au fluide de nettoyage animé d'un mouvement de rotation.

11. Dispositif de nettoyage selon l'une quelconque des revendications 8 à 10, **caractérisé en ce que** la partie de nettoyage comporte un boîtier avec une section sensiblement circulaire et/ou hélicoïdale au moins par zones, à travers lequel peut être transporté le fluide de nettoyage entraîné en rotation autour de l'axe longitudinal de la partie de nettoyage, ledit boîtier comportant une ouverture orientée vers la surface de grille, à travers laquelle une partie du fluide de nettoyage, animé d'un mouvement de rotation, peut être évacuée dans un jet de fluide de nettoyage dirigé, en formant avec la surface de grille un angle inférieur à 45°, de préférence inférieur à 35°, encore mieux à peu près égal à 0°, de telle sorte que, de ce fait, les saletés adhérant à la surface de grille peuvent être soulevées par le jet de fluide de nettoyage et être emportées.

12. Dispositif de nettoyage selon l'une quelconque des revendications 8 à 11, **caractérisé en ce que** le fluide de nettoyage peut être acheminé par l'intermédiaire de la conduite d'amenée tangentiellement à la partie de nettoyage en générant un moment cinétique.

13. Dispositif de nettoyage selon l'une quelconque des revendications 8 à 12, **caractérisé en ce que** la partie de nettoyage comporte une hélice, de préférence rotative, qui s'étend dans la direction longitudinale de la partie de nettoyage et au moyen de laquelle le fluide de nettoyage qui la traverse peut être mis en rotation.

14. Dispositif de nettoyage selon l'une quelconque des revendications 1 à 13, **caractérisé en ce que** le dispositif de nettoyage (40) contient une pompe (54).

15. Dispositif de nettoyage selon l'une quelconque des revendications 1 à 14, **caractérisé en ce que** la grille de retenue (1 ; 10 ; 14) est un tamis perforé (14) ou un tamis à barreaux (10).

16. Dispositif de nettoyage selon la revendication 1, **caractérisé en ce que** la poussée, qui prédomine dans la partie de nettoyage (26) et est dirigée vers la surface de grille (20), est inclinée par rapport au plan de la grille de retenue selon un angle (66) inférieur à 35°, de préférence à peu près égal à 0°.

17. Grille de retenue (1 ; 10 ; 14) pour des installations de vidange d'eaux usées, telles que des canalisations d'eaux usées, des déversoirs d'eau de pluie ou similaires, comportant un dispositif de nettoyage selon l'une quelconque des revendications 1 à 16, associé à la grille de retenue (1 ; 10 ; 14).

18. Procédé de nettoyage de grilles de retenue (1 ; 10 ; 14), qui sont montées dans des installations de vidange d'eaux usées, telles que des canalisations d'eaux usées, des déversoirs d'eau de pluie ou similaires et à travers lesquelles circule l'eau chargée de saletés, telle que des eaux usées, l'eau de pluie ou l'eau mixte, moyennant l'utilisation d'un dispositif de nettoyage (40) selon au moins l'une des revendications 1 à 16,
**caractérisé en ce que**
un fluide de nettoyage liquide est acheminé vers la grille de retenue (1 ; 10 ; 14) et est guidé le long de la surface de grille (20) au moyen d'une partie de nettoyage (26) du dispositif de nettoyage (40), disposée de préférence sur le cotée des eaux polluées, de manière à générer une poussée prédominant dans la partie de nettoyage (26), et **en ce que** la poussée est inclinée par rapport au plan de la grille de retenue selon un angle (66) inférieur à 45°, et **en ce que** les saletés (18) adhérant à la surface de grille (20) sont détachées au moyen de la force de nettoyage orientée vers la grille de retenue (1 ; 10 ; 14) par un jet de fluide de nettoyage (24) qui est formé par le fluide de nettoyage liquide sortant de la partie de nettoyage (26) à travers une ouverture (32), et sont évacuées.

19. Procédé selon la revendication 18, **caractérisé en ce que** le fluide de nettoyage utilisé est l'eau polluée (2 ; 4 ; 6) présente dans l'installation de vidange des eaux usées sur le côté des eaux polluées.

20. Procédé selon la revendication 18, **caractérisé en ce que** le fluide de nettoyage utilisé est l'eau épurée (8) présente en aval de la grille de retenue (1 ; 10 ; 14) sur le côté d'eau propre.

21. Procédé selon l'une quelconque des revendications 18 à 20, **caractérisé en ce que** le fluide de nettoyage est acheminé à travers un boîtier (58) de la partie de nettoyage (26), ayant une section sensiblement trapézoïdale au moins par zones, ledit boîtier de la partie de nettoyage (58) comportant une ouverture (32), qui est orientée vers la surface de grille (20) et à travers laquelle une partie du fluide de nettoyage est évacuée dans un jet de fluide de nettoyage (24) dirigé, en formant avec la surface de grille (20) un angle (66) inférieur à 25°, de telle sorte que, de ce fait, les saletés (18) adhérant à la surface de grille peuvent être soulevées par le jet de fluide de nettoyage (24) et être emportées.

22. Procédé selon l'une quelconque des revendications 18 à 20, **caractérisé en ce que** le fluide de nettoyage est entraîné en rotation de telle sorte que le vecteur du moment cinétique du fluide de nettoyage animé d'un mouvement de rotation est sensiblement parallèle au plan de la grille de retenue et/ou à l'axe longitudinal de la partie de nettoyage.

23. Procédé selon la revendication 22, **caractérisé en ce qu'**une composante de translation, orientée dans la direction du vecteur de moment cinétique et/ou dans la direction de l'axe longitudinal de la partie de nettoyage, est imprimée en plus au fluide de nettoyage animé d'un mouvement de rotation.

24. Procédé selon la revendication 22 ou 23, **caractérisé en ce que** le fluide de nettoyage animé d'un mouvement de rotation autour de l'axe de la partie de nettoyage est transporté à travers un boîtier de la partie de nettoyage, ayant une section sensiblement circulaire et/ou hélicoïdale au moins par zones, ledit boîtier de la partie de nettoyage comportant une ouverture orientée vers la surface de grille, à travers laquelle une partie du fluide de nettoyage, animé d'un mouvement de rotation, est évacuée dans un jet de fluide de nettoyage dirigé, en formant avec la surface de grille un angle inférieur à 25°, de telle sorte que, de ce fait, les saletés adhérant à la surface de grille peuvent être soulevées par le jet de fluide de nettoyage et être emportées.

25. Procédé selon l'une quelconque des revendications 22 à 24, **caractérisé en ce que** le fluide de nettoyage peut être acheminé tangentiellement à la partie de nettoyage en générant un moment cinétique.

26. Procédé selon l'une quelconque des revendications 22 à 25, **caractérisé en ce que** le fluide de nettoyage circulant à travers la partie de nettoyage est entraîné en rotation par une hélice, de préférence rotative, qui s'étend dans la direction longitudinale de la partie de nettoyage.

27. Procédé selon la revendication 18, **caractérisé en ce que** la poussée est inclinée par rapport au plan de la grille de retenue en formant un angle (66) inférieur à 35°, de préférence à peu près égal à 0°.
